(19) Europäisches Patentamt

European Patent Office

Office européen des brevets

(11) **EP 0 629 943 B1**

(12) **EUROPÄISCHE PATENTSCHRIFT**

(45) Veröffentlichungstag und Bekanntmachung des Hinweises auf die Patenterteilung:
**10.11.1999  Patentblatt 1999/45**

(51) Int Cl.$^6$: **G06F 7/52**

(21) Anmeldenummer: **94107442.9**

(22) Anmeldetag: **13.05.1994**

(54) **Multiplizierer für reelle und komplexe Zahlen**

Multiplier for real and complex numbers

Multiplieur pour nombres réels et complexes

(84) Benannte Vertragsstaaten:
**FR GB IT NL**

(30) Priorität: **21.05.1993  DE 4317074**

(43) Veröffentlichungstag der Anmeldung:
**21.12.1994  Patentblatt 1994/51**

(73) Patentinhaber: **Micronas Intermetall GmbH
79108 Freiburg (DE)**

(72) Erfinder:
* **Klumpp, Markus, Dipl.-Ing.
  D-79312 Emmendingen (DE)**
* **Witte ,Franz-Otto, Dipl.-Ing
  D-79312 Emmendingen (DE)**

(56) Entgegenhaltungen:
**EP-A- 0 209 446         EP-A- 0 428 942
GB-A- 2 095 008**

## Beschreibung

Die Erfindung betrifft einen Multiplizierer für reelle oder komplexe Zahlen mit einer Multipliziereinrichtung zur Bildung von Partialprodukten aus einer ersten und zweiten, jeweils 2m-stelligen Zahl, die dem Multiplizierer an einem ersten bzw. zweiten Dateneingang zugeführt sind und deren Produkt als dritte Zahl an einem 4m-stelligen Datenausgang 1 abgreifbar ist, wobei m eine ganze Zahl größer/gleich 1 ist.

Derartige Multiplizierer, insbesondere als Teil von monolithisch integrierten Signalprozessoren, werden bei der digitalen Verarbeitung von Audio- und Videosignalen in zunehmendem Maße verwendet, beispielsweise bei der Demodulation von frequenz- oder phasenmodulierten Signalen, die auch in Quadraturmodulation vorliegen können. Übliche Standardmultiplizierer sind in der Regel sehr flexibel und über ihr Betriebsprogramm an viele Aufgaben anpaßbar. Für die direkte Signalverarbeitung sind sie jedoch nur verwendbar, wenn die zu verarbeitende Signalfrequenz klein gegenüber der durch die Zykluszeit des Betriebsprogramms begrenzten Rechenfrequenz ist, wobei die erforderliche Rechengenauigkeit durch die Stellenanzahl des Multiplizierers gegeben ist. Eine Beschleunigung wird bekanntlich durch eine parallele Verarbeitung erreicht. Bei mehrstelligen Zahlen bietet sich die parallele Berechnung der einzelnen Partialproduktzeilen und die parallele Addition der einzelnen Partialprodukte an. Die parallele Verarbeitung ganzer Datenzeilen während eines einzigen Abtasttaktes wird auch als Pipeline-Verfahren bezeichnet.

Eine weitere Steigerung der Geschwindigkeit ist möglich, wenn mittels eines Array-Multiplizierers die parallele Verarbeitung mehr als eine einzige Datenzeile betrifft. Im Grenzfall werden sämtliche Partialprodukte und alle Additionen während eines einzigen Arbeitstaktes ausgeführt. Beispiele für Standard- und Parallelmultiplizierer sind sehr ausführlich in den Grundlagebüchern von Kai Hwang, "Computer Arithmetic", "Principles, Architecture and Design", Verlag J. Wiley & Sons, New York, 1979 oder Shlomo Waser und Michael J. Flynn "Introduction to Arithmetic for Digital Systems Designers", Verlag Holt, Rinehart and Winston, New York, 1982 beschrieben.

Es ist einsehbar, daß der erforderliche Schaltungs- und Verdrahtungsaufwand beim Pipeline- oder Array-Verfahren so hoch ist, daß Parallelmultiplizierer gegenüber universellen Standardmultiplizierern, die in der Regel die Multiplikation seriell über eine ALU (= Arithmetische-Logik-Einheit) ausführen, in ihrer Anwendung festgelegt sind und unterschiedliche Funktionsweisen kaum zulassen. Die erforderlichen elektronischen Schalter oder Zwischenstufen, die für eine höhere Flexibilität erforderlich wären, vergrößern bei der monolithischen Integration den erforderlichen Flächenbedarf des Multiplizierers und reduzieren über die größere Signallaufzeiten und größeren Lasten die erreichbare Rechengeschwindigkeit.

Bei manchen Signalprozessoren, insbesondere für den Audiosignalbereich, sind für eine erste Multiplikationsart Multiplizierer erforderlich, die wegen der geforderten Rechengenauigkeit eine hohe Stellenanzahl aufweisen und beispielsweise die Multiplikation von zwei 20-stelligen Dualzahlen zu einer 40-stelligen Dualzahl ermöglichen. Diese Multiplizierer sollen aber auch für eine zweite Multiplikationsart geeignet sein, insbesondere für die Kanaldemodulation, bei der zwei komplexe Zahlen miteinander zu multiplizieren sind, wobei der jeweilige Real- und Imaginärteil jeweils eine 10-stellige Dualzahl umfaßt. Die komplexe Ausgangszahl weist dann sowohl im Realteil als auch im Imaginärteil 20 Binärstellen auf. Im folgenden wird statt Binär- oder Dualstelle meist der kürzere Begriff Stelle verwendet. Die Multiplikation zweier komplexer Zahlen ist eine häufig auftretende Rechenoperation, die beispielsweise bei der Drehung eines komplexen Vektors oder bei Standardroutinen wie der FFT (= Schnelle Fourier Transformation) auftritt.

EP-A-209 446 stellt eine Anordnung dar, die wahlweise Real- und Komplexzahlen multipliziert, und in der beide Operanden in zwei Teile aufgespalten werden und in zwei verschiedenen nacheinander gekoppelten Multipliziereinrichtungen verarbeitet werden. Die Multiplikation zweier komplexer Zahlen wird jedoch in zwei aufeinanderfolgenden Rechentakten berechnet.

Es ist daher Aufgabe der in den Ansprüchen gekennzeichneten Erfindung, einen Multiplizierer anzugeben, der auf einfache Weise sowohl die Multiplikation von reellen als auch komplexen Zahlen ermöglicht und eine hohe Rechengeschwindigkeit aufweist.

Der Erfindung gemäß Anspruch 1 liegt die Erkenntnis zugrunde, daß bei der Realzahl- und der Komplexzahlmultiplikation die gleichen Partialprodukte zu bilden sind und die Unterschiede lediglich in der Wertigkeit und in der Addition der einzelnen Partialprodukte liegen. Die Wertigkeit ist über eine Stellenverschiebung änderbar, wobei eine Stellenverschiebungszahl n bei Dualzahlen einer Multiplikation oder Division um die Zweierpotenz $2^n$ entspricht. Nach der Erfindung werden die Eingangsdaten jeweils in zwei Stellenbereiche aufgeteilt und vier getrennte Gruppenmultiplikationen mit den einzelnen Stellenbereichen ausgeführt. Den Partialprodukten dieser vier Gruppen wird gruppenweise eine bestimmte Wertigkeit, im folgenden Grundwertigkeit genannt, zugeordnet. Der Grundwertigkeit entspricht eine gemeinsame Gruppenverschiebung aller Partialprodukte dieser Gruppe. Innerhalb der Gruppe bleibt die individuelle Wertigkeit der einzelnen Partialprodukte, die sich unmittelbar aus der Multiplikation der beiden Stellenbereiche ergibt, bestehen. Dies gilt für beliebige Zahlensysteme, also nicht nur für Dualzahlen.

Im folgenden wird mit Partialprodukt das Multiplikationsergebnis einer einzigen Stelle des Multiplikanten (z. B. eine Binärstelle) mit einer einzigen Stelle des Multiplikators (z.B. ebenfalls eine Binärstelle) bezeichnet. Das Partialprodukt ist also die kleinste Multiplikationseinheit bei der Produktbildung. Eine Partialproduktzeile enthält alle Partialprodukte, die sich aus der Produktbildung einer einzigen Stelle des Multiplikanten bzw. Multiplikators mit sämtlichen Stellen des Multiplikators bzw. Multiplikanten ergeben. Sämtliche Partialproduktzeilen bilden schließlich ein Partialproduktfeld. Das Partialproduktfeld kann in einzelne Partialproduktgruppen aufgeteilt werden.

Bei den meist verwendeten Dualzahlen beginnt die individuelle Wertigkeit jedes Stellenbereichs mit der niedrigsten Wertigkeit $2^0$. Bei einer angenommenen 20-stelligen Dualzahl a laufen die individuellen Wertigkeiten der beiden Stellenbereiche a0 und a1 jeweils von $2^0$ bis $2^9$. Entsprechend wird eine zweite, 20-stellige Dualzahl b in die beiden Stellenbereiche b0 bzw. b1 aufgespalten. Mit a0 und b0 sind im folgenden jeweils die wertniedrigeren Stellenbereiche der ersten bzw. zweiten Dualzahl a bzw. b gemeint. Eine resultierende Wertigkeit für das einzelne Partialprodukt ergibt sich aus dem Produkt aus individueller Wertigkeit und zugehöriger Grundwertigkeit.

Die Realzahlmultiplikation a·b stellt sich mit den oben definierten Stellenbereichen formal wie folgt dar, wobei die Grundverschiebung jeder Partialproduktgruppe durch den Wertigkeitsfaktor $2^0$ bzw. $2^{10}$ bzw. $2^{20}$ definiert wird:

$$a \cdot b = a1 \cdot b1 \cdot 2^{20} + (a1 \cdot b0 + a0 \cdot b1) \cdot 2^{10} + a0 \cdot b0 \cdot 2^0$$

Bei der Komplexzahlmultiplikation wird dem Stellenbereich a1 die Realzahl und dem Stellenbereich a0 die Imaginärzahl einer ersten Komplexzahl a1 + ja0 zugeordnet. Eine zweite Komplexzahl b1 + jb0 wird in gleicher Weise definiert. Die Komplexzahlmultiplikation stellt sich damit formal wie folgt dar:

$$(a1+ja0)(b1+jb0) = (a1 \cdot b1 - a0 \cdot b0) \cdot 2^0 + j(a1 \cdot b0 + a0 \cdot b1) \cdot 2^0$$

Ein Vergleich beider Multiplikationen läßt erkennen, daß in beiden Fällen jeweils folgende vier Partialproduktgruppen gebildet werden:

$$a1 \cdot b1, \; a0 \cdot b0, \; a1 \cdot b0, \; a0 \cdot b1$$

Die beiden Multiplikationen unterscheiden sich lediglich durch eine Umgruppierung der einzelnen Partialproduktgruppen, wobei die Partialproduktgruppe a0·b0 subtrahiert oder vor der Additon negiert wird. Die Umgruppierung ist dabei als eine Änderung der Wertigkeit und damit als eine Grundverschiebung der jeweiligen Partialproduktgruppe anzusehen.

Die Aufteilung der zu multiplizierenden Zahlen in zwei Stellenbereiche kann auf beliebige Weise erfolgen, wenn sichergestellt ist, daß den zugehörigen Partialprodukten die richtige, individuelle Wertigkeit zugeordnet wird. Für das leichtere Verständnis wird im folgenden jedoch von einer zweckmäßigen Aufteilung ausgegangen, bei der alle Stellen nach aufsteigenden Wertigkeiten geordnet sind. Zur klaren Unterscheidung von Position und Inhalt einer Binärstelle in einer mehrstelligen Binärzahl wird im folgenden gelegentlich zwischen Bitposition und Bitwert unterschieden.

Die Erfindung wird nun anhand der Figuren der Zeichnung näher erläutert:

Fig.1 und Fig.2 zeigen schematisch ein trapezförmiges Partialproduktfeld bei der Multiplikation zweier mehrstelliger, reeller Zahlen,

Fig.3 und Fig.4 zeigen die Partialproduktfelder von Fig.1 und Fig.2, denen jedoch formal zwei Komplexzahlen zugeordnet sind,

Fig.5 und Fig.6 zeigen die bei Komplexzahlen erforderliche Umgruppierung innerhalb eines erweiterten Partialproduktfeldes,

Fig.7 zeigt ein rechteckförmiges Partialproduktfeld,

Fig.8 zeigt schematisch als Blockschaltbild ein Ausführungsbeispiel eines umschaltbaren Multiplizierers,

Fig.9 zeigt in Tabellenform ein Beispiel für einen modifizierten Booth's Algorithmus,

Fig.10 zeigt schematisch in Tabellenform die Partialprodukte im rechteckförmigen Partialproduktfeld bei der Multiplikation von zwei achtstelligen Dualzahlen mittels des Booth's Algorithmus von Fig.9,

Fig.11 zeigt schematisch eine Partialproduktbildung mittels Multiplexer,

Fig.12 zeigt schematisch eine Addierbaumstruktur als Addieranordnung für die Partialprodukte und

Fig.13 bis Fig.20 zeigen in Tabellenform alle Partialprodukte bei der Realzahl- und Komplexzahlmultiplikation am Beispiel von zwei 8-stelligen Eingangsdaten, unter Verwendung des modifizierten Booth-Algorithmus von Fig.9.

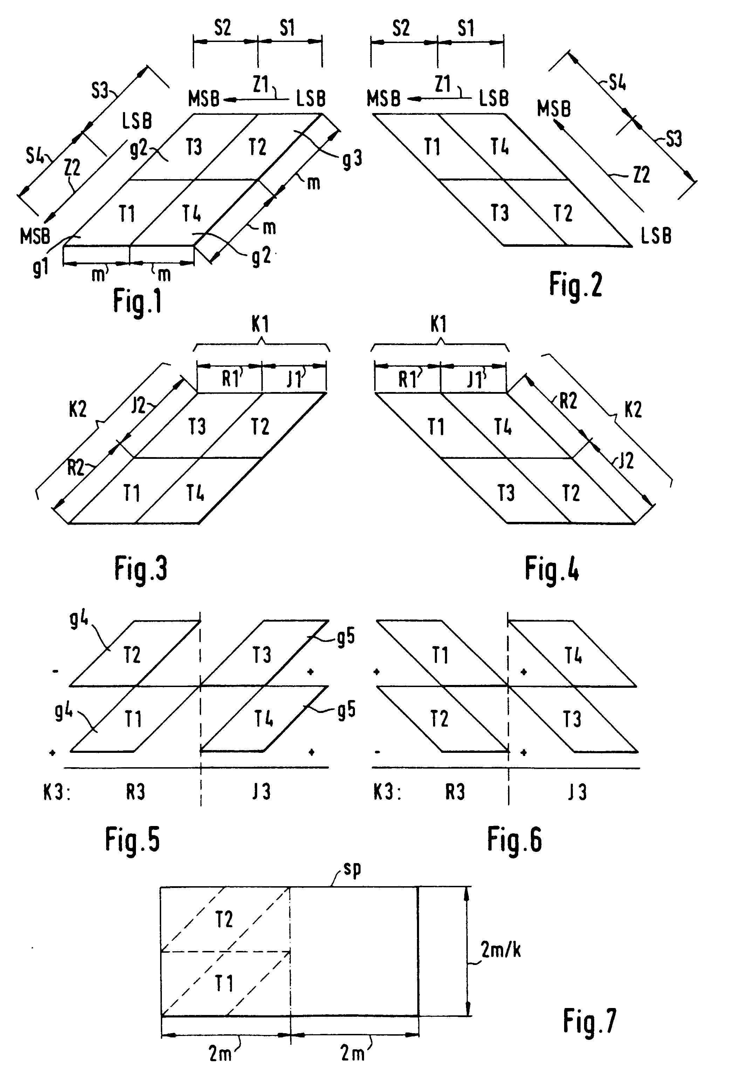

Fig.1 zeigt schematisch ein trapezförmiges Partialproduktfeld bei der Multiplikation einer ersten Zahl Z1 mit einer zweiten Zahl Z2, die jeweils eine 2m-stellige Zahl, in der Regel eine Dualzahl, umfassen. Die Neigung des trapezförmigen Partialproduktfeldes ergibt sich aus der Multiplikationsfolge, mit der die einzelnen Partialproduktzeilen gebildet werden. In Fig.1 und Fig.2 ist dies durch die unterschiedliche Ausrichtung - siehe Richtungspfeil - der zweiten Zahl Z2 schematisch dargestellt.

An der trapezförmigen Anordnung der Partialproduktfelder ändert sich nichts, wenn die 2m Stellen der ersten und zweiten Zahl jeweils in zwei m-stellige Bereiche aufgeteilt werden. Die erste Zahl Z1 wird dabei auf einen ersten und zweiten Stellenbereich S1, S2 und die zweite Zahl Z2 auf einen dritten und vierten Stellenbereich S3, S4 in aufsteigender Wertigkeit aufgeteilt. Das Partialproduktfeld wird dadurch in vier gleichgroße, ebenfalls trapezförmige Teilfelder aufgeteilt. Die Partialprodukte des zweiten und vierten Stellenbereichs S2, S4 bilden ein erstes Teilfeld T1, die Partialprodukte des ersten und dritten Stellenbereichs S1, S3 bilden ein zweites Teilfeld T2, die Partialprodukte des zweiten und dritten Stellenbereichs S2, S3 bilden ein drittes Teilfeld T3 und die Partialprodukte des ersten und vierten Stellenbereichs S1, S4 bilden ein viertes Teilfeld T4.

Das Ergebnis der Multiplikation, nämlich die einzelnen Stellen einer dritten Zahl Z3, wird gebildet, indem die einzelnen Partialprodukte stellenrichtig addiert werden. Bei der trapezförmigen Darstellung von Fig.1 und Fig.2 sind dies die vertikal übereinanderliegenden Partialprodukte des gesamten Partialproduktfeldes. Geht man von den isoliert zu betrachtenden Teilfeldern aus, dann beginnt jedes Teilfeld rechtsbündig im Falle von Dualzahlen mit der individuellen Wertigkeit $2^0$ und endet linksbündig mit der individuellen Wertigkeit $2^{2m-1}$. Damit die Addition der einzelnen Teilfelder richtig erfolgt, muß jedem Teilfeld eine bestimmte Grundwertigkeit zugeordnet werden, die zusammen mit der individuellen Wertigkeit für jedes Partialprodukt eine resultierende Wertigkeit g ergibt. Aus sämtlichen resultierenden Wertigkeiten g muß sich wieder das gesamte, trapezförmige Partialproduktfeld rekonstruieren lassen. Das Teilfeld T2 umfaßt in Fig.1 und Fig.2 die Wertigkeiten von $2^0$ bis $2^{2m-1}$. Diesem Teilfeld T2 wird eine dritte Grundwertigkeit g3 zugeordnet, die den Wert $2^0$ aufweist. Die Teilfelder T3 und T4 umfassen im trapezförmigen Partialproduktfeld die Wertigkeiten $2^m$ bis $2^{3m-1}$. Den Teilfeldern T3 und T4 wird als Grundwertigkeit eine zweite Grundwertigkeit g2 mit dem Wert $2^m$ zugeordnet. Dem ersten Teilfeld T1, das im trapezförmigen Partialproduktfeld die Wertigkeiten $2^{2m}$ bis $2^{4m-1}$ umfaßt, wird eine erste Grundwertigkeit gl mit dem Wert $2^{2m}$ zugeordnet.

Die trapezförmige Anordnung des gesamten Partialproduktfeldes und der Teilfelder kann sich direkt auf ein praktisches Ausführungsbeispiel, z.B. in einem matrixförmigen Speicher, beziehen. Die Anordnung der Partialprodukte kann andererseits auch nur eine gedankliche sein, weil die Partialprodukte mittels beliebiger Adressen in einem adressierbaren Speicher abgelegt werden können.

In Fig.3 und Fig.4 wird nochmals das trapezförmige Partialproduktfeld von Fig.1 bzw. Fig.2 mit den vier Teilfeldern dargestellt. Anstatt der ersten und zweiten Zahl Z1, Z2 wird dem Partialproduktfeld formal eine erste und zweite Komplexzahl K1 = R1 + jl1, K2 = R2 + jl2 zugeordnet. Dabei ist dem ersten Stellenbereich SI eine erste Imaginärzahl I1, dem zweiten Stellenbereich S2 eine erste Realzahl R1, dem dritten Stellenbereich S3 eine zweite Imaginärzahl I2 und dem vierten Stellenbereich S4 eine zweite Realzahl R2 zugeordnet. Die Teilfelder T1, T2 enthalten die reellen Komponenten R3 und die Teilfelder T3, T4 die imaginären Komponenten I3 einer dritten Komplexzahl . K3 = R3 + jl3 Eine Addition nach dem Schema von Fig.1 oder Fig.2 würde jedoch zu einem falschen Ergebnis für die Komplexzahl K3 führen, weil das obige Additionsschema nicht zulässig ist, z.B. würden hierbei teilweise reelle und imaginäre Komponenten addiert werden. Bei der Komplexzahlmultiplikation ist daher eine Umgruppierung der Teilfelder erforderlich, wie sie sich beispielsweise aus Fig.5 oder Fig.6 ergibt.

In Fig.5 und Fig.6 werden alle Teilfelder bis auf das erste Teilfeld T1 umgruppiert, so daß die Addition der einzelnen Partialprodukte nach Realteil und Imaginärteil streng getrennt ist. In Fig.5 und Fig.6 kann bei der Umgruppierung auch die rechte Seite mit der linken Seite vertauscht werden, dies bedeutet lediglich eine Änderung der zugehörigen Grundwertigkeiten. In Fig.5 und Fig.6 ist den beiden linksstehenden Teilfeldern T1, T2 eine vierte Grundwertigkeit g4 mit dem Wert $2^{2m}$ zugeordnet. Den beiden rechtsstehenden Teilfeldern T3, T4 ist eine fünfte Grundwertigkeit g5 mit dem Wert $2^0$ zugeordnet. Die Subtraktion des zweiten Teilfeldes T2 vom ersten Teilfeld T1 kann durch eine Addition ersetzt werden, wenn das zweite Teilfeld T2 zuvor negiert worden ist. Bei binär codierten Dualzahlen entspricht die Negierung in der Regel der bekannten Zweierkomplementbildung.

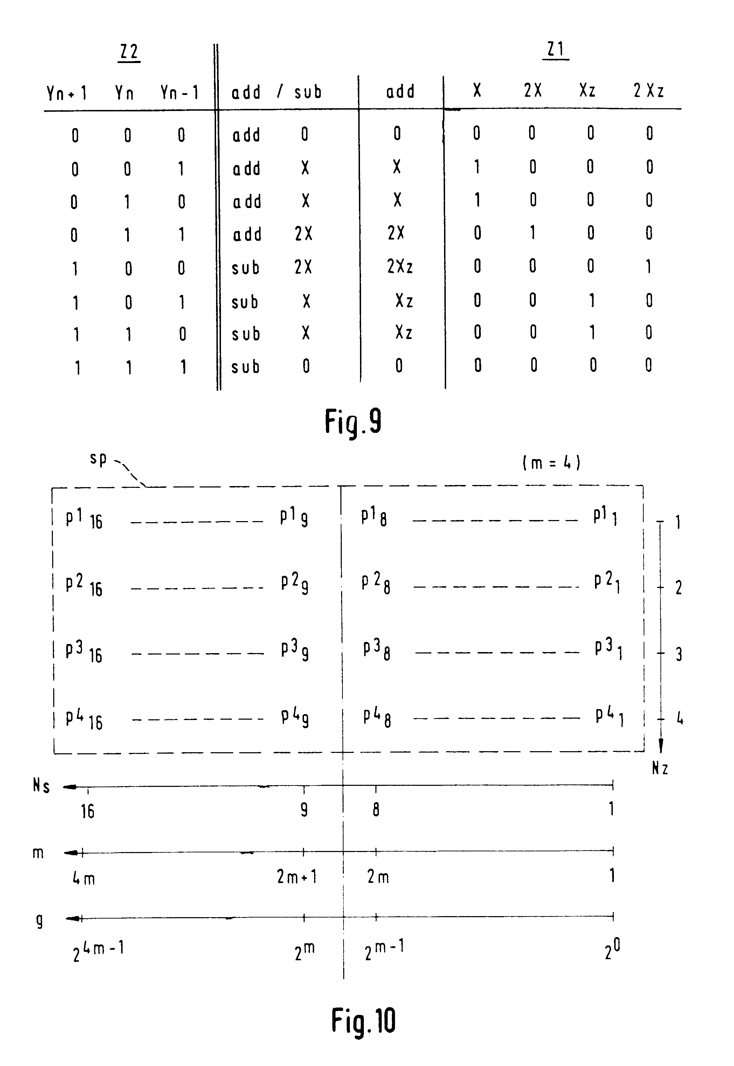

Die Umgruppierung der Teilfelder bei der Realzahl- oder Komplexzahlmultiplikation ermöglicht ein in Fig.7 dargestelltes, rechteckförmiges Partialproduktfeld sp, das sämtliche Partialprodukte aufnimmt, die für die Bestimmung sämtlicher Stellen der dritten Zahl Z3 oder der dritten Komplexzahl K3 nötig sind. Hierunter fallen auch die erforderlichen Stellenerweiterungen bzw. Stellenergänzungen im MSB bzw. LSB-Bereich der Partialproduktzeilen. Die Vorschriften zur Stellenerweiterung oder Stellenergänzung ergeben sich aus dem verwendeten Zahlensystem. In horizontaler Richtung umfaßt das rechteckförmige Partialproduktfeld sp 4m Stellen und in vertikaler Richtung 2m Zeilen. Die Anzahl der Partialproduktzeilen läßt sich jedoch mittels geeigneter Multiplikationsalgorithmen reduzieren. Der in Fig.9 als Tabelle dargestellte, modifizierte Booth's Algorithmus zur Multiplikation, reduziert die Anzahl der Partialprodukte um die Hälfte. Der in Fig.7 angegebene Zeilenreduktionsfaktor k beträgt somit 2. Mit höherem Aufwand sind auch höhere Zeilenreduktionsfaktoren erreichbar.

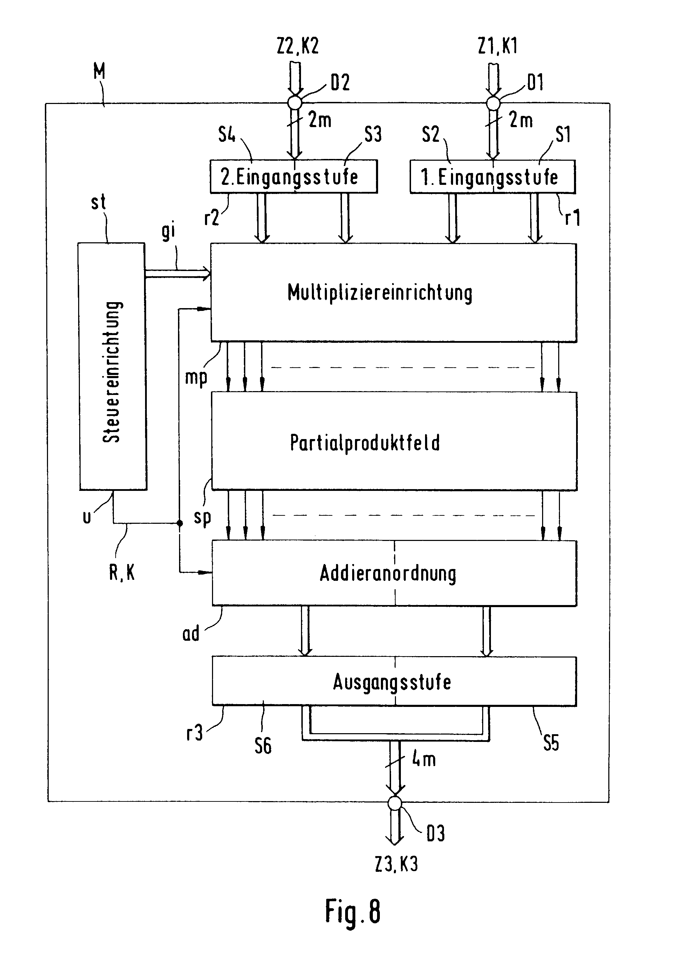

In Fig.8 ist als ein Ausführungsbeispiel der Erfindung ein umschaltbarer Multiplizierer M als Blockschaltbild dargestellt, der auf einfache Weise zwischen der Realzahl- und Komplexzahlmultiplikation umgeschaltet werden kann. Ein erster Dateneingang D1 ist über seine 2m Eingangsstellen mit der ersten Zahl Z1 oder der ersten Komplexzahl K1 gespeist. Eine erste Eingangsstufe r1 dient der Entkopplung oder Zwischenspeicherung der zugeführten Daten. Diese werden mittels der ersten Eingangsstufe r1 in zwei gleich große Stellenbereiche aufgespalten, nämlich den m-stelligen ersten Stellenbereich S1 und den m-stelligen zweiten Stellenbereich S2. Auf gleiche Weise ist ein zweiter Dateneingang D2 für die zweite Zahl Z2 bzw. die zweite Komplexzahl K2 mit einer zweiten Eingangsstufe r2 verbunden, die die 2m Stellen der zugeführten Daten in den m-stelligen dritten und vierten Stellenbereich S3, S4 aufgeteilt.

Die einzelnen Stellen der vier Stellenbereiche S1 bis S4 sind einer Multipliziereinrichtung mp zugeführt, die aus den einzelnen Stellen die zugehörigen Partialprodukte bildet. Dies kann zeilenweise in paralleler Form erfolgen, so daß alle Partialprodukte, die sich aus der Multiplikation der Stellen des ersten oder zweiten Dateneingangs D1, D2 mit einer Stelle des anderen Dateneingangs ergeben, gleichzeitig gebildet werden. Im Grenzfall ist die Multipliziereinrichtung mp so ausgebildet, daß alle Partialprodukte gleichzeitig gebildet werden können.

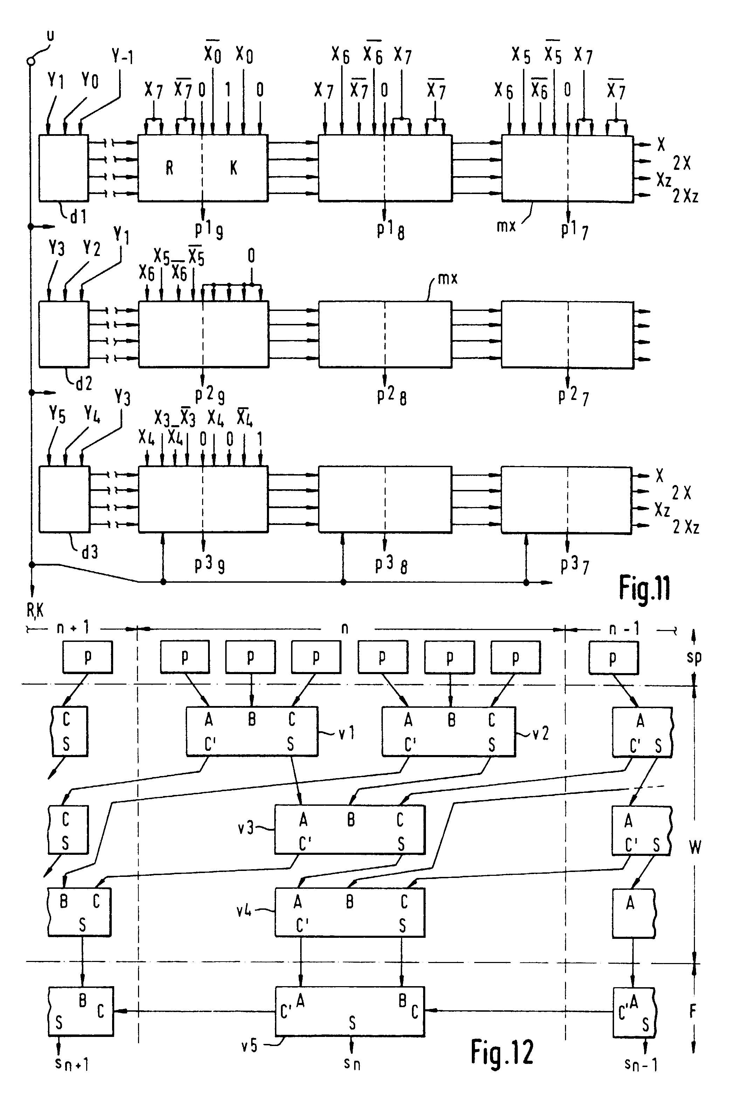

Die Multipliziereinrichtung mp ist mit einer Steuereinrichtung st verbunden, die an einem Umschaltausgang u ein Umschaltsignal R,K für die Realzahl- oder Komplexzahlmultiplikation abgibt. Die Steuereinrichtung st stellt auch die erforderlichen Grundwertigkeiten gi in der Multipliziereinrichtung ein. Im Ausführungsbeispiel von Fig.11 sind jedem einzelnen Multiplexer mx bereits zwei feste Wertigkeiten zugeordnet, deren Auswahl durch das Umschaltsignal R,K aktiviert wird. Jede fest vorgegebene Wertigkeit entspricht dabei der resultierenden Wertigkeit, die sich aus der individuellen Wertigkeit und der Grundwertigkeit gi zusammensetzt.

Die mittels der Multipliziereinrichtung mp gebildeten Partialprodukte bilden das rechteckförmige Partialproduktfeld sp. Ein Beispiel für die Anordnung eines derartigen Partialproduktfeldes sp zeigt Fig.10 für die Partialprodukte zweier achtstelliger Dualzahlen. Dem rechteckförmigen Partialproduktfeld sp von Fig.8 entspricht insbesondere auch die matrixförmige Anordnung der Multiplexer mx in Fig.11. Jeder Multiplexer mx liefert dabei an seinem Ausgang ein binäres Signal p(Nz,Ns), das einem einzigen Partialprodukt des rechteckförmigen Partialproduktfeldes sp fest zugeordnet ist. Diese Zuordnung ändert sich bei der Realzahl- oder Komplexzahlmultiplikation nicht. Es ändert sich hingegen die Zuordnung auf der Eingangsseite.

Alle Partialprodukte des rechteckförmigen Partialproduktfeldes sp sind einer Addieranordnung ad zugeführt, in der die Partialprodukte gleicher Wertigkeit miteinander addiert werden. Fig.12 zeigt hierzu eine geeignete Addierbaumstruktur W, die eine parallele Addition der einzelnen Partialprodukte erlaubt. Bei der Komplexzahlmultiplikation ist darauf zu achten, daß kein Übertragsignal zwischen den beiden Hälften der Addieranordnung ad übertragen wird. Mit der Addieranordnung ist eine Ausgangsstufe r3 verbunden, die einen 4m-stelligen Datenausgang D3 speist, an dem die dritte Zahl Z3 oder die dritte Komplexzahl K3 abgreifbar ist. Die 4m-stellige Ausgangsstufe r3 ist in zwei gleichgroße Stellenbereiche aufgespalten, nämlich einen fünften und sechsten Stellenbereich S5, S6 mit jeweils 2m Stellen. Bei der Komplexzahlmultiplikation mit einer Aufteilung der Teilfelder entsprechend Fig.5 oder Fig.6 liefert der fünfte Stellenbereich S5 die dritte Imaginärzahl I3 und der sechste Stellenbereich S6 die dritte Realzahl R3. Die erforderlichen Umschaltungen in der Addieranordnung ad erfolgen mittels des Umschaltsignals R,K.

In Fig.9 ist in Tabellenform eine Rechenvorschrift zur Multiplikation von zwei mehrstelligen Dualzahlen dargestellt, die auch unter der Bezeichnung "modifizierter Booth's Algorithmus" bekannt ist. Eine ausführliche Beschreibung hierzu befindet sich in der angegebenen Literaturstelle, S. Waser und M.J. Flynn, "Introduction to Arithmetic for Digital Systems Designers", insbesondere auf den Seiten 132 bis 135. Die rechte, matrixförmige Spalte Z1 von Fig.9 bezeichnet mit "1" die auszuführende Operation, um die jeweilige Partialproduktzeile zu erhalten. "X" bedeutet, daß Z1 für die Partialproduktzeile direkt übernommen wird; "2X" bedeutet, daß Z1 mit einer Stellenverschiebung, die dem Multiplikationsfaktor 2 entspricht, als Partialproduktzeile übernommen wird; "Xz" bedeutet, daß das Zweierkomplement von Z1 als Partialproduktzeile übernommen wird und "2Xz" bedeutet schließlich, daß Z1 mit dem Faktor 2 zu multiplizieren und daraus das Zweierkomplement zu bilden ist. Die Zweierkomplementbildung kann auch vor der Schiebefunktion stattfinden. Das Ergebnis ist dann als Partialproduktzeile zu übernehmen.

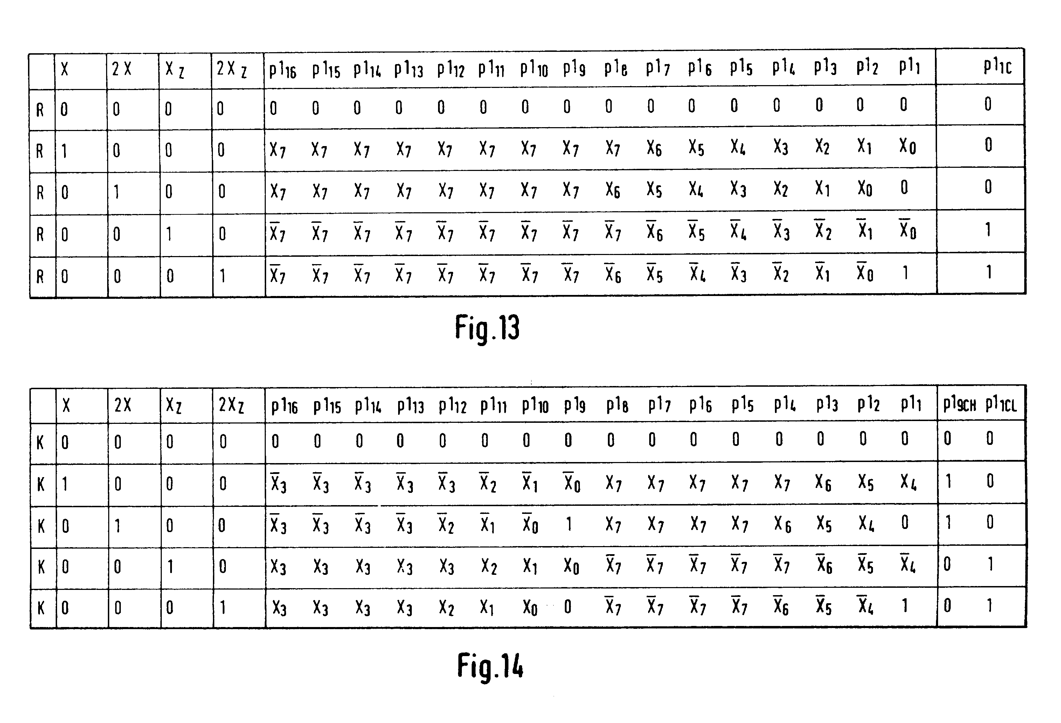

Die zweite Spalte "add" von rechts gibt nochmals die Operationen der rechten Spalte an, wobei impliziert ist, daß alle Partialproduktzeilen zu addieren sind. Die dritte Spalte "add/sub" von rechts stellt in Kurzform die Operationen dar, wenn außer dem Additionsbefehl auch ein Subtraktionsbefehl für die einzelnen Partialproduktzeilen zulässig ist. Dann kann nämlich auf die Zweierkomplementbildung verzichtet werden. Die linke Spalte "Z2" gibt schließlich an, welche Stellen $y_0$ bis $y_{2m-1}$ der zweiten Zahl Z2 bezüglich ihres Bitwertes für den Algorithmus zu betrachten sind. Der Index "n" bildet mit den drei Werten n+1, n, n-1 gleichsam ein Fenster, das für jede Partialproduktzeile über die zweite Zahl Z2 gelegt wird. Bei der ersten Partialproduktzeile ist n = 0, dies ergibt sich entsprechend der Wertigkeit $2^0$ der ersten Stelle der Zahl Z2. Bei der zweiten Partialproduktzeile ist n = 2, bei der dritten Partialproduktzeile ist n = 4, bei der vierten ist n = 6 und so weiter bis n = 2m-2 bei der letzten Partialproduktzeile. Anhand der Tabellen Fig.13 bis Fig. 20 wird dies an einem Beispiel deutlich gemacht. Da bei diesem Algorithmus (siehe Fig.9) die Anzahl der Partialproduktzeilen halbiert wird, sind die einzelnen Partialproduktzeilen im Partialproduktfeld sp um zwei Bitpositionen, anstatt einer Bitposition gegeneinander versetzt angeordnet.

Fig.10 zeigt schematisch die Anordnung der einzelnen Partialprodukte p(Nz,Ns) innerhalb des rechteckförmigen Partialproduktfeldes sp. Die räumliche Anordnung wird durch zwei Zahlen Nz, Ns definiert. Die erste Zahl Nz ergibt die jeweilige Partialproduktzeile und die zweite, tiefer gestellte Zahl Ns gibt die jeweilige Position innerhalb der Partialproduktzeile an. Beide Zahlen Nz und Ns beginnen dabei mit der Zahl 1 zu laufen.

Bei der Anwendung des Booth's Algorithmus von Fig.9 für zwei achtstellige Dualzahlen, also 2m = 8, läuft Nz von 1 bis 4 und Ns von 1 bis 16. Jeder der vier Stellenbereiche S1 bis S4 hat somit m = 4 Stellen. Das ergibt für das rechteckförmige Speicherfeld sp horizontal in Zeilenrichtung 4m = 16 Stellen. Ihnen entsprechen die resultierenden Wertigkeiten g von $2^0$ bis $2^{4m-1} = 2^{15}$.

Fig.11 zeigt die Bildung der einzelnen Partialprodukte p(Nz,Ns) mittels Multiplexer mx. Das Beispiel bezieht sich auf achtstellige reelle oder komplexe Eingangszahlen, die mittels des Booth's Algorithmus von Fig.9 miteinander zu multiplizieren sind. Jeder Multiplexer mx hat neun Dateneingänge und einen Datenausgang. Die Dateneingänge sind mit verschiedenen Stellen der Eingangsstufe r1 und/oder mit dem Bitwert 1 oder 0 gespeist. Die Partialproduktbildung erfordert teilweise auch eine Invertierung der zugeführten Bitwerte. Dies erfolgt am leichtesten durch invertierende Abgriffe an der ersten Eingangsstufe r1.

Alle Multiplexer mx einer Partialproduktzeile sind gemeinsam an vier Steuerleitungen einer Multiplexersteuerung d(Nz) angeschlossen. Den Steuerleitungen sind die vier Steuersignale X, 2X, Xz, 2Xz von Fig.9 zugeordnet. Jede Multiplexersteuerung ist eingangsseitig mit drei benachbarten Stellen $y_{n+1}$, $y_n$, $y_{n-1}$ der zweiten Eingangsstufe r2 verbunden. Die Zuordnung der Steuersignale zu den einzelnen Bitwerten ergibt sich aus Tabelle Fig.9.

Bei der ersten Partialproduktzeile sind die Dateneingänge der ersten Multiplexersteuerung dl mit den Stellen $y_1$, $y_0$ und $y_{-1}$ der zweiten Eingangsstufe r2 verbunden. Da $y_{-1}$ kleiner als die LSB-Stelle der zweiten Eingangszahl ist, wird dieser Dateneingang $y_{-1}$ an den Binärwert 0 angeschlossen.

Die zweite Multiplexersteuerung d2 für die zweite Partialproduktzeile ist mit den Stellen $y_3$, $y_2$ und $y_1$, die dritte Multiplexersteuerung d3 für die dritte Partialproduktzeile mit den Stellen $y_5$, $y_4$ und $y_3$ und die nicht mehr dargestellte vierte Multiplexsteuerung für die vierte Partialproduktzeile mit den Stellen $y_7$, $y_6$, $y_5$ zu verbinden.

Die Funktionsweise jedes Multiplexers mx besteht darin, daß mittels der vier Steuersignale X, 2X, Xz, 2Xz jeweils einer von vier Eingängen auf den Ausgang durchgeschaltet wird. Eine zusätzliche Neutralstellung, also wenn keines der Steuersignale vorhanden ist, schaltet den Binärwert 0 auf den Ausgang durch. Die Bezeichnung der vier Steuerbefehle entspricht dabei der zweiten Spalte von rechts in Fig.9. Der Neutralstellung ist in Fig.11 jeweils der neunte Dateneingang in der Multiplexermitte zugeordnet.

Die Umschaltung von der Realzahl- auf die Komplexzahlmultiplikation erfolgt durch das Umschaltsignal R,K, das einem weiteren Steuereingang jedes Multiplexers zugeführt ist. In Fig.11 ist dies der besseren Übersichtlichkeit wegen nur für die dritte Partialproduktzeile dargestellt. Das Umschaltsignal R,K bewirkt dabei, daß von den neun Schaltstellungen im Multiplexer mx bei der Realzahlmultiplikation R die vier Stellen auf der linken Seite und bei der Komplexzahlmultiplikation K die vier Stellen auf der rechten Seite aktiviert werden können.

Fig.11 zeigt lediglich einen Ausschnitt des gesamten Multiplexerfeldes. Die Zuordnung von Dateneingang zu Steuereingang entspricht den Tabellen von Fig.13 bis Fig.20 in Verbindung mit dem modifizierten Booth's Algorithmus von Fig.9. In jeder Multiplexerhälfte ist der linke, nämlich der erste Dateneingang dem Steuersignal X, der zweite Dateneingang dem Steuersignal 2X, der dritte Dateneingang dem Steuersignal Xz und der vierte Dateneingang dem Steuersignal 2Xz zugeordnet. Der genau in der Mitte der Multiplexer mx liegende Dateneingang ist immer mit dem Binärwert 0 verbunden. Diese Neutralstellung gilt sowohl für die Realzahl- als auch die Komplexzahlmultiplikation. Ein Beispiel aus Fig.11, das die erste Partialproduktzeile betrifft und auch für die Tabellen von Fig.13 und Fig.14 gilt, soll dies verdeutlichen. Als Beispiel wird der Multiplexer genommen, der das Partialprodukt $p1_9$ bildet. Dessen Dateneingänge sind bei der Realzahlmultiplikation R in der oben angegebenen Reihenfolge mit folgenden Stellen der ersten Zahl Z1 verbunden: x7, x7, x7, x7. Bei der Komplexzahlmultiplikation K sind es die folgenden Stellen der ersten Imaginärzahl 11 oder folgende Werte: x0, 1, x0, 0. Der ersten Multiplexersteuerung d1 sind über die drei Dateneingänge $y_{n+1}$, $y_n$, $y_{n-1}$ bei der Realzahlmultiplikation R die Bitwerte der Wertigkeitstellen $2^1$ und $2^0$ der zweiten Zahl Z2 sowie der Binärwert 0 zugeführt. Bei der Komplexzahlmultiplikation K sind es die Bitwerte der Wertigkeitsstellen $2^1$ und $2^0$ der zweiten Imaginärzahl I2 sowie der Binärwert 0.

Fig.12 zeigt schematisch ein Ausführungsbeispiel für die Addieranordnung ad, und zwar die bereits genannte Addierbaumstruktur W zur parallelen Additon der Partialprodukte. Es ist lediglich ein Ausschnitt der gesamten Addieranordnung ad dargestellt. In jeder Spalte n sind dabei jeweils sechs Partialprodukte p zu addieren. Derartige Addierbaumstrukturen sind ausführlich in der angegebenen Literaturstelle von Kai Hwang, "Computer Arithmetic...", insbesondere auf den Seiten 100 bis 103 im Abschnitt 4.3 "Multilevel Carry-Save Adders" beschrieben. Addierbaumstrukturen sind auch unter dem Begriff "Wallace-Tree" bekannt.

Die Schaltung nach Fig.12 gliedert sich in drei Teile. Dem ersten Teil entspricht das rechteckförmige Partialproduktfeld sp, das hier in einer linearer Anordnung vorliegt, wobei alle Partialprodukte p einer Spalte n als lineare Gruppe zusammengefaßt sind. Die linearen Gruppen sind ebenfalls linear nach ihren Wertigkeiten geordnet. Den zweiten Teil bildet die Addierbaumstruktur W, die für jede Partialproduktgruppe vier Volladdierer v1 bis v4 enthält, die miteinander und mit Volladdierern der benachbarten unteren und oberen Spalte n-1 bzw. n+1 gekoppelt sind. Den dritten Teil bildet ein Kettenaddierer F mit schnellem, durchlaufendem Überlaufpfad. Er wird aus hintereinandergeketteten Volladdierern v5 gebildet, wobei die Summenausgänge S die Bitwert $s_{n-1}$, $s_n$, $s_{n+1}$ für die jeweilige Bitposition n-1 bzw. n bzw. n+1 des Ausgangsdatenwortes Z3, K3 liefern.

Jeder Volladdierer v1 bis v5 hat eingangsseitig zwei Dateneingänge A, B und einen Überlaufeingang C und ausgangsseitig einen Summenausgang S sowie einen Überlaufausgang C'. Die sechs Partialprodukte p der Spalte n sind den A-, B- und C-Eingängen des ersten und zweiten Volladdierers v1, v2 zugeführt. Die Überlaufausgänge C' des ersten, zweiten und dritten Volladdierers v1, v2, v3 sind Eingängen des benachbarten, stellenhöheren Addierbaums n+1 zugeführt. Der C-Eingang des dritten Volladdierers v3 und die B- und C-Eingänge des vierten Volladdierers v4 sind mit Ausgängen des benachbarten, stellenniedrigeren Addierbaums n-1 verbunden. Der C'- und der S-Ausgang des vierten Volladdierers ist mit dem A- bzw. B-Eingang des fünften Volladdierers v5 verbunden. Innerhalb der Spalte n ist der S-Ausgang des ersten Volladdierers v1 mit dem A-Eingang des dritten Volladdierers v3 verbunden. Dessen S-Ausgang speist den A-Eingang des vierten Volladdierers v4, der über seinen C'- und S-Ausgang mit dem A- und B-Eingang des fünften Volladdierers v5 verbunden ist. Alle Stufen des Kettenaddierers F sind zur Übernahme des Überlaufsignals aus der vorausgehenden Stufe über den C'-Ausgang und C-Eingang miteinander verkettet.

Bei der Komplexzahlmultiplikation müssen bei der Addieranordnung ad sämtliche Überlaufbewegungen zwischen den Bitpositionen 2m und 2m+1 unterbunden werden. Daraus ergibt sich, daß mittels elektronischer Schalteinrichtungen, die vom Umschaltsignal R,K gesteuert werden, in der Addierbaumstruktur W und im Kettenaddierer F an den entsprechenden Bitpositionen der Überlaufpfad geöffnet werden muß und statt dessen, je nach dem Zahlensystem oder der Operation, der Bitwert 0 oder 1 einzufügen ist. Anhand der folgenden Tabellen von Fig.13 bis Fig.20 wird dies ausführlich beschrieben.

Das Umschaltsignal R,K hat jedoch in der Addieranordnung ad noch eine zweite Funktion, denn bei allen Zweierkomplementbildungen ist der jeweils niedrigsten Bitposition eine 1, die Zweierkomplementergänzung, hinzuzufügen. Bei der Realzahlmultiplikation R liegen diese Bitpositionen im Bereich 1 bis 2m und bei der Komplexzahlmultiplikation K in den beiden Bereichen 1 bis m und 2m+1 bis 3m, je nach dem, ob die Realzahl R1 oder die Imaginärzahl I1 von der Zweierkomplementbildung betroffen ist. Die Addition des Wertes 1 in die entsprechende Spalte erfolgt bei der Addierbaumstruktur W von Fig.12 auf einfache Weise dadurch, daß einem der Eingänge der Volladdierer v3 oder v4, die eigentlich mit einem Überlaufausgang C' der nächstniederen Spalte verbunden sein sollten, die Zahl 1 zugeführt wird. Dies kann mittels elektronischer Umschalter in dem jeweiligen Überlaufpfad bewirkt werden. Die Steuerung erfolgt dabei über die Steuersignale Xz, 2Xz und das Umschaltsignal R,K. Die Zweierkomplementergänzung im Falle von 2Xz kann aber auch dadurch erfolgen, daß der dem Steuersignal 2Xz zugeordnete Dateneingang des betroffenen Multiplexers mx an die Zahl 1 anstatt an die Zahl 0 angeschlossen wird.

Fig.13 bis Fig.20 zeigen in Tabellenform ausführlich sämtliche Partialprodukte des rechteckförmigen Partialproduktfeldes sp, sowohl bei der Realzahl- als auch bei der Komplexzahlmultiplikation R bzw. K. Da jeweils zwei achtstelligen Dualzahlen miteinander zu multiplizieren sind und der Algorithmus von Fig.9 angewendet wird, ergibt dies mit m = 4 jeweils sechzehn Stellen und vier Partialproduktzeilen.

Jeweils zwei Tabellen liefern die Werte einer einzigen Partialproduktzeile in Abhängigkeit von der Rechenoperation R bzw. K und der jeweils auszuführenden Operation X, 2X, Xz oder 2Xz. Diese Angaben befinden sich in einem matrixförmigen Teil auf der linken Seite jeder Tabelle. Rechts davon schließen sich die zu dem jeweiligen Steuersignal gehörigen sechzehn Partialprodukte p(Nz,Ns) an. Und ganz rechts wird in den Tabellen die gegebenenfalls erforderliche Zweierkomplementergänzung p(Nz,Ns,C), p(Nz, Ns,CH), p(Nz,Ns,CL) als "1" angegeben. Ns gibt an, zu welcher Bitposition Ns der Partialproduktzeile Nz der Wert 1 zu addieren ist. "C" gibt an, daß die Zweierkomplementergänzung bei der Realzahlmultiplikation erfolgt und die gesamte Partialproduktzeile (Ns = 1 bis 4m) betrifft. "CL" und "CH" geben an, daß die Zweierkomplementergänzung bei der Komplexzahlmultiplikation erfolgt und CL bzw. CH die untere (Ns = 1 bis 2m) bzw. die obere (Ns = 2m+1 bis 4m) Hälfte der Partialproduktzeile betrifft.

Die Partialproduktzeilen der Fig.14, 16, 18 und 20 enthalten in der rechten Hälfte (Ns = 1 bis 8) die imaginären und in der linken Hälfte (Ns = 9 bis 16) die reellen Partialprodukte der dritten Komplexzahl K3. In der rechten Hälfte des rechteckförmigen Partialproduktfeldes sp befinden sich somit das dritte und vierte Teilfeld T3, T4 und in der linken Hälfte das erste Teilfeld T1 und das zu negierende zweite Teilfeld T2. Zwischen den Bitpositionen 8 und 9 ist der Wechsel der Teilfelder deutlich zu erkennen.

In Fig.13 zeigt die erste Zeile, daß keines der Steuersignale durch die erste Multiplexersteuerung d1 aktiviert wird. Alle Multiplexer mx der ersten Partialproduktzeile verbleiben daher in ihrer Neutralstellung und geben als Partialprodukt die Zahl 0 ab. In der zweiten Zeile ist das Steuersignal X aktiviert. Nach Fig.9 sind daher alle Bitwerte der ersten Zahl Z1 unverändert zu übernehmen. Da es sich um die erste Partialproduktzeile handelt, werden die Bitwerte rechtsbündig in das rechteckförmige Partialproduktfeld sp eingeordnet. Die acht Bitwerte x0 bis x7 der ersten Zahl Z1 bilden die Partialprodukte $p1_1$ bis $p1_8$. Die Partialprodukte $p1_9$ bis $p1_{16}$ werden entsprechend dem Zweierkomplement-Zahlensystem mit dem höchsten Bitwert x7 erweitert. Links von $p1_8$ haben damit alle Partialprodukte den Wert x7. Man bezeichnet dies auch als Zweierkomplement-Bereichserweiterung mittels der MSB-Stelle.

In der dritten Zeile sind entsprechend dem Steuerbefehl 2X alle Bildpositionen der Zahl Z1 um eine Stelle nach links verschoben. Die erste Bitposition, die dem Partialprodukt $p^1_1$ zugeordnet ist, bekommt den Wert 0. Die vierte Zeile gibt an, daß das Zweierkomplement Xz von Z1 für die Partialproduktzeile zu übernehmen ist. Nach dem Zweierkomplement-Zahlensystem sind hierbei sämtliche Bitwerte der Zahl Z1 zu invertieren, wobei an der niedersten Bitposition, hier beim Partialprodukt $p1_1$, der Wert 1 zu addieren ist. Die Bereichserweiterung ab Ns = 9 erfolgt mit x7. Die Zweierkomplementergänzung $p1_{1c}$ kann nach Fig.12 über einen freien Überlaufeingang der Volladdierer von Spalte Ns = 1 zugeführt werden. Die fünfte Zeile zeigt schließlich die erste Partialproduktzeile, wenn die Operation 2Xz auszuführen ist. Dies bedeutet zunächst die Multiplikation der Zahl Z1 mit dem Faktor 2, also eine Verschiebung um eine Bitposition, dann Invertierung aller Bitwerte und Addition der Zweierkomplementergänzung $P1_{1C}$ an der Bitposition Ns = 1. Durch die Stellenverschiebung ist der zugehörige Multiplexer freigeworden, so daß die Zweierkomplementergänzung direkt seinem vierten Dateneingang anstatt einer 0 zugeführt werden kann. Die Bereichserweiterung ab Ns = 10 erfolgt mit x7.

Fig.14 zeigt die Bildung der ersten Partialproduktzeile bei der Komplexzahlmultiplikation K. Die erste Zeile symbolisiert die Neutralstellung. Der zweiten Zeile ist die Operation X zugeordnet. Für die Bitwerte x0 bis x3 in der linken Hälfte, die dem zu negierenden zweiten Teilfeld T2 zuzurechnen sind, muß eine Invertierung stattfinden. Die zugehörige Zweierkomplementergänzung $p1_{9CH}$ ist zur neunten Bitposition zu addieren. Die Bereichserweiterung erfolgt mit x3. Diese Negierung geht aus dem linken Teil der Tabelle 14, die den Booth's Algorithmus von Fig.9 zeigt, nicht hervor. Die Bitwerte x4 bis x7 der ersten Komplexzahl K1 werden auf den Bitpositionen 1 bis 4 auf der rechten Seite übernommen. Die Bereichserweiterung auf den Bitpositionen 5 bis 8 erfolgt mit x7. Eine Zweierkomplementergänzung $p1_{CL}$ liegt in der unteren Hälfte CL nicht vor.

Die dritte Zeile gibt die Operation 2X an. Auf der linken Seite ist diese Operation mit den Bitwerten x0 bis x3 auszuführen. Anschließend wird zur Negierung das Zweierkomplement durch Invertierung der einzelnen Bitwerte und die Zweierkomplementergänzung $p1_{CH}$ gebildet. Der Wert 1 kann dabei direkt in der neunten Bitposition übernommen werden. Auf der rechten Seite findet lediglich die Schiebefunktion der Bitwerte x4 bis x7 statt. Auf der Bitposition 1 wird eine 0 ergänzt und die Bitpositionen 6 bis 8 werden mit dem MSB-Bitwert x7 erweitert. Die Bereichserweiterung erfolgt auf der linken Seite ab Ns = 14 mit x3.

Die vierte Zeile wird durch die Zweierkomplementoperation Xz bestimmt. Da es sich in der linken Hälfte um Partialprodukte des zweiten Teilfeldes T2 handelt, sind diese zweimal zu negieren - dies entspricht aber wieder den Bitwerten der Imaginärzahl I1. Von den Bitwerten x4 bis x7 in der rechten Hälfte ist das Zweierkomplement zu bilden. Entsprechend sind diese Stellen zu invertieren und eine Zweierkomplementergänzung $p1_{1CL}$ ist zur Bitposition 1 zu addieren - z.B. über einen freien Überlaufeingang. Die Bitposition 5 bis 8 sind mit dem MSB-Bitwert x7 zu erweitern.

Die fünfte Zeile, die der Operation 2Xz zugeordnet ist, bezeichnet eine Schiebeoperation und eine Zweierkomplementbildung. Da auf der linken Seite das zu negierende zweite Teilfeld T2 betroffen ist, ist hierfür nochmals das Zweierkomplement zu bilden. Eine zweimalige Zweierkomplementbildung führt natürlich wieder zu den ursprünglichen Bitwerten. Dadurch werden die Bitwerte x0 bis x3 der ersten Komplexzahl K1 in der linken Hälfte auf den Bitpositionen 10 bis 13 unverändert übernommen. Die freie neunte Bitposition ist mit 0 aufzufüllen. Auf der rechten Seite ist nur die Schiebefunktion und die Zweierkomplementbildung auszuführen. Dadurch sind die Bitwerte x4 bis x7 gegenüber der ersten Realzahl R1 invertiert und der Wert 1 steht als Zweierkomplementergänzung $p1_{CL}$ auf der Bitposition Ns = 1.

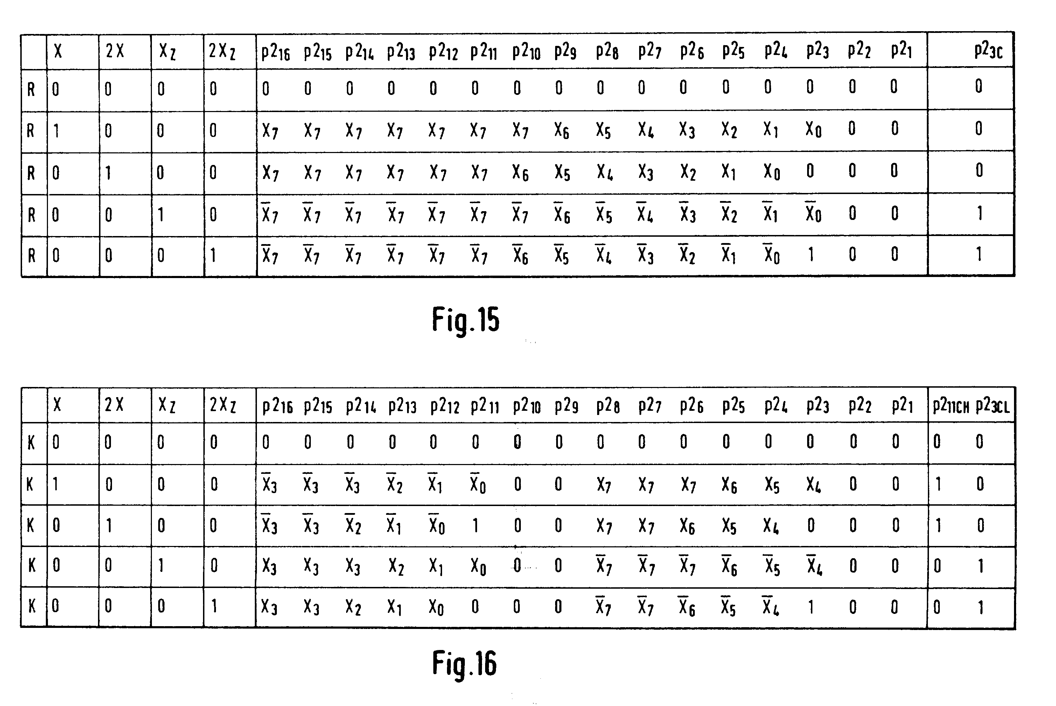

Bei den Figuren 15 und 16 handelt es sich um Tabellen für die zweite Partialproduktzeile bei der Realzahl-bzw. Komplexzahlmultiplikation R bzw. K. Im Unterschied zu den Tabellen von Fig.13 und Fig.14 gelten für die zweite Partialproduktzeile als Bezugsstelle für die Zweierkomplementergänzung bei der Realzahlmultiplikation die Bitposition Ns = 3 und bei der Komplexzahlmultiplikation K die Bitpositionen Ns = 3 und Ns = 11. Dies ergibt sich aus der trapezförmigen Anordnung der Teilfelder T2, T3 und der Reduktion der Partialproduktzeilen infolge des modifizierten Booth's Algorithmus. Die erforderlichen, rechtsbündigen Stellenergänzungen erfolgen mit dem Wert 0 an den Bitpositionen 1 und 2 bei der Realzahlmultiplikation und bei der Komplexzahlmultiplikation an den CL-Bitpositionen 1 und 2 sowie den CH-Bitpositionen 9 und 10. Auch in der Tabelle von Fig.16 findet in der linken Hälfte eine zusätzliche Zweierkomplementbildung infolge des zu negierenden zweiten Teilfeldes T2 statt. Dies führt ähnlich wie in Fig.14 wieder zu einer doppelten Zweierkomplementbildung in den Zeilen 4 und 5, wodurch die unveränderten Bitwerte x0 bis x3 der ersten Imaginärzahl I1 bei Zeile 4 in die Bitpositionen 11 bis 14 bzw. bei Zeile 5 infolge der Stellenverschiebung in die Bitpositionen 12 bis 15 übernommen werden.

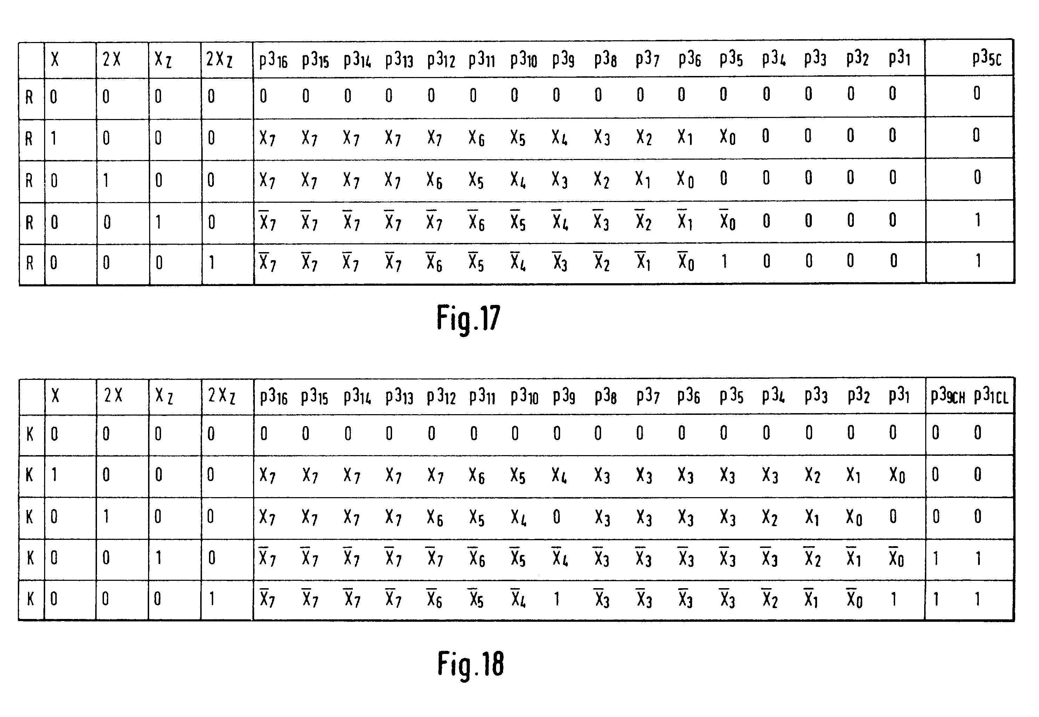

Die Figuren 17 und 18 zeigen die Bildung der dritten Partialproduktzeile, deren Bezugsstelle für die Zweierkomplementergänzung bei der Realzahlmultiplikation R Ns = 5 ist. Die Bezugsstellen für Zweierkomplementergänzung bei der Komplexzahlmultiplikation K, die sich auf das erste und vierte Teilfeld T1, T4 beziehen, sind Ns = 9 und Ns = 1. Eine doppelte Zweierkomplementbildung findet hier nicht mehr statt.

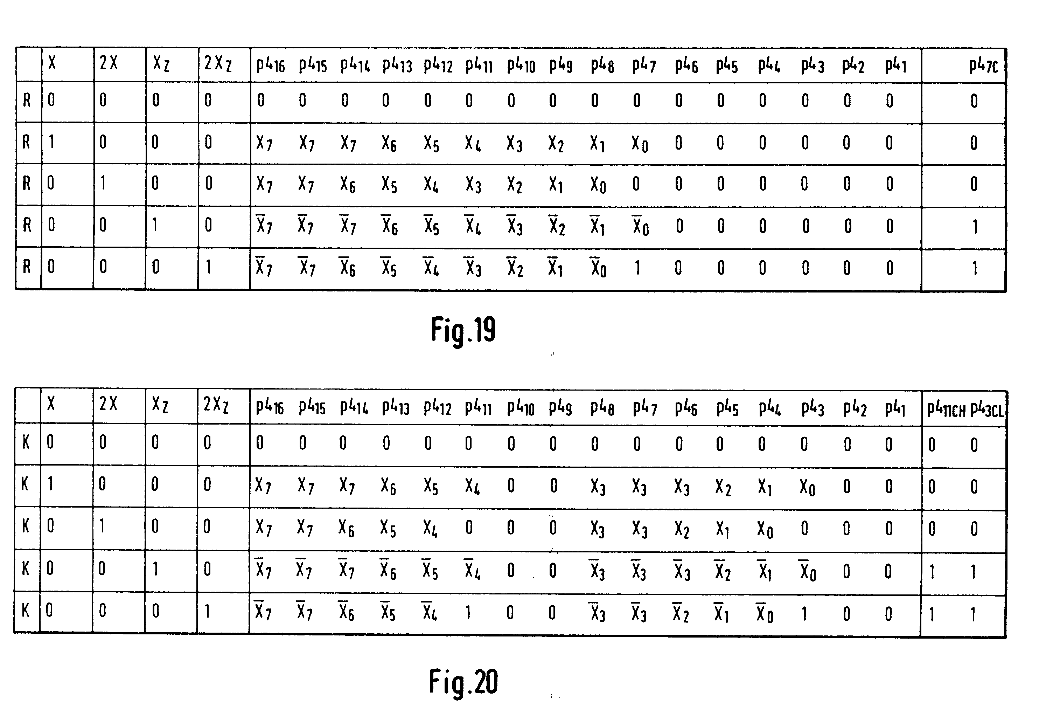

Die Figuren 19 und 20 liefern die Tabellen für die vierte Partialproduktzeile. Die vierte Partialproduktzeile ist dem ersten und vierten Teilfeld T1, T4 zugeordnet. Bei der Realzahlmultiplikation R ist die Bezugsstelle für die Zweierkomplementergänzung Ns = 7. Bei der Komplexzahlmultiplikation K ist die Bezugsstelle für die Zweierkomplementergänzung auf der linken Seite Ns = 11 und auf der rechten Seite Ns = 3. Eine doppelte Zweierkomplementbildung findet bei der vierten Partialproduktzeile nicht statt.

Das in den Tabellen Fig.13 bis Fig.20 dargestellte Beispiel für die Bildung der Partialprodukte mit m = 4 kann ohne weiteres auf den eingangs angegebenen Multiplizierer für 20-stellige Dualzahlen, wobei m = 10 ist, oder für Multiplizierer mit einer anderen Stellenzahl angewendet werden. Ferner ermöglicht die Erfindung auch die Anpassung des beschriebenen Realzahl-Komplexzahlmultiplizierers an andere Zahlensysteme und andere Algorithmen zur Partialproduktbildung.

**Patentansprüche**

1. Multiplizierer (M) für reelle oder komplexe Zahlen mit einer Multipliziereinrichtung (mp) zur Bildung von Partialprodukten aus einer ersten und zweiten, jeweils 2m-stelligen Zahl (Z1, Z2) die dem Multiplizierer an einem ersten bzw. zweiten Dateneingang (D1, D2) zugeführt sind und deren Produkt als dritte Zahl (Z3) an einem 4m-stelligen Datenausgang (D3) abgreifbar ist, wobei m eine ganze Zahl größer/gleich 1 ist, und in dem der erste bzw. zweite Dateneingang (D1, D2) jeweils in einen m-stelligen ersten und zweiten bzw. dritten und vierten Stellenbereich (S1, S2 bzw. S3, S4) aufgespalten ist,
   gekennzeichnet durch folgende Merkmale:

   - die Partialprodukte des zweiten und vierten Stellenbereichs (S2, S4) bilden ein erstes Teilfeld (T1), die Partialprodukte des ersten und dritten Stellenbereichs (S1, S3) bilden ein zweites Teilfeld (T2), die Partialprodukte des zweiten und dritten Stellenbereichs (S2, S3) bilden ein drittes Teilfeld (T3) und die Partialprodukte des ersten und vierten Stellenbereichs (S1, S4) bilden ein viertes Teilfeld (T4),

   - eine Steuereinrichtung (st) schaltet wahlweise den Multiplizierer (M) von einer Realzahlmultiplikation (R) auf eine Komplexzahlmuliplikation (K) um, die aus einer ersten und zweiten Komplexzahl (K1, K2) eine dritte Komplexzahl (K3) bildet,

   - bei der Realzahlmultiplikation (R) ist der erste und dritte bzw. zweite und vierte Stellenbereich (S1, S3 bzw. S2, S4) mit den Stellen 1 bis m bzw. m+1 bis 2m der ersten oder zweiten Zahl (Z1, Z2) gespeist,

   - bei der Komplexzahlmuliplikation (K) ist der erste und dritte Stellenbereich (S1, S3) mit m Imaginärzahlstellen (I1, I2) und der zweite und vierte Stellenbereich (S2, S4) mit m Realzahlstellen (R1, R2) der ersten oder zweiten Komplexzahl (K1, K2) gespeist,

   - bei der Realzahlmultiplikation (R) bewirkt die Steuereinrichtung (st) mittels einer ersten Stellenzuordnung, daß dem ersten Teilfeld (T1) eine erste Grundwertigkeit (g1), dem dritten und vierten Teilfeld (T3, T4) eine zweite Grundwertigkeit (g2) und dem zweiten Teilfeld (T2) eine dritte Grundwertigkeit (g3) zugeordnet ist und daß die Addition der Partialprodukte des ersten, zweiten, dritten und vierten Teilfeldes (T1 bis T4) stellenrichtig entsprechend einer resultierenden Wertigkeit (g) der einzelnen Partialprodukte erfolgt, um die 4m Stellen der dritten Zahl (Z3) zu liefern, und

   - bei der Komplexzahlmultiplikation (K) bewirkt die Steuereinrichtung (st) mittels einer zweiten Stellenzuordnung, daß dem ersten und zweiten bzw. dritten und vierten Teilfeld (T1, T2 bzw. T3, T4) eine vierte bzw. fünfte Grundwertigkeit (g4 bzw. g5) zugeordnet wird und daß entsprechend der resultierenden Wertigkeit das zweite Teilfeld (T2) vom ersten Teilfeld (T1) subtrahiert und getrennt hierzu das dritte und vierte Teilfeld (T3, T4) addiert wird, um 2m Stellen des Realteils (R3) bzw. 2m Stellen des Imaginärteils (I3) der dritten Komplexzahl (K3) zu liefern.

2. Multiplizierer nach Anspruch 1, dadurch gekennzeichnet, daß die Anordnung der Partialprodukte p(Nz,Ns) bei der Realzahl- und Komplexzahlmultiplikation ein rechteckförmiges Partialproduktfeld (sp) bildet, das in Zeilenrichtung 4 m Stellen und in Spaltenrichtung kleiner/gleich 2m Zeilen umfaßt, und
daß die Lage der Teilfelder (T1 bis T4) im rechteckförmigen Partialproduktfeld (sp) durch die zugehörigen Grundwertigkeiten (g1 bis g5) festgelegt ist.

3. Multiplizierer nach Anspruch 1 oder 2, dadurch gekennzeichnet, daß bei der Multiplikation von reellen oder komplexen Dualzahlen die erste Grundwertigkeit (g1) den Wert $2^{2m}$, die zweite Grundwertigkeit (g2) den Wert $2^m$, die dritte Grundwertigkeit (g3) den Wert $2^0$, die vierte Grundwertigkeit (g4) den Wert $2^{2m}$ und die fünfte Grundwertigkeit (g5) den Wert $2^0$ hat.

4. Multiplizierer nach einem der Ansprüche 1 bis 3, dadurch gekennzeichnet, daß die Partialproduktbildung mittels eines Booth's Algorithmus erfolgt.

5. Multiplizierer nach einem der Ansprüche 1 bis 4, dadurch gekennzeichnet, daß bei der Komplexzahlmultiplikation die Partialprodukte des zweiten Teilfeldes (T2) als negierte Werte gebildet sind und diese negierten Partialprodukte mit den Partialprodukten des ersten Teilfeldes (T1) stellenrichtig entsprechend den resultierenden Wertigkeiten (g) addiert werden.

6. Multiplizierer nach einem der Ansprüche 1 bis 5, dadurch gekennzeichnet, daß jedem Partialprodukt (p(Nz,Ns)) ein Multiplexer (mx) zugeordnet ist, dessen Dateneingänge mit definierten Stellen des ersten Dateneingangs (D1) und dessen Steuereingänge mit definierten Stellen des zweiten Dateneingangs (D2) gekoppelt sind und an dessen Datenausgang das jeweilige Partialprodukt abgegeben wird.

7. Multiplizierer nach Anspruch 6, dadurch gekennzeichnet, daß die den Dateneingängen der Multiplexer (mx) zugeführten Signale teilweise invertiert sind.

8. Multiplizierer nach einem der Ansprüche 1 bis 7, dadurch gekennzeichnet, daß die stellenrichtige Addition der Partialprodukte in der Addieranordnung (ad) mindestens teilweise mittels einer Addierbaumstruktur (W) erfolgt.

## Claims

1. A multiplier (M) for real or complex numbers comprising a multiplying device (mp) for forming partial products from a first 2m-digit number (Z1) and a second 2m-digit number (Z2) which are fed to the multiplier through a first data input (D1) and a second data input (D2), respectively, and whose product is provided as a third number (Z3) at a 4m-digit data output (D3), where m is an integer greater than or equal to 1, the first data input (D1) being divided into an m-digit first digit range (S1) and an m-digit second digit range (S2), and the second data input (D2) being divided into an m-digit third digit range (S3) and an m-digit fourth digit range (S4), <u>characterized by the following features:</u>

- The partial products of the second and fourth digit ranges (S2, S4) form a first subfield (T1), the partial products of the first and third digit ranges (S1, S3) form a second subfield (T2), the partial products of the second and third digit ranges (S2, S3) form a third subfield (T3), and the partial products of the first and fourth digit ranges (S1, S4) form a fourth subfield (T4);

- a controller (st) switches the multiplier (M) selectively from real-number multiplication (R) to complex-number multiplication (K), which forms from a first complex number (K1) and a second complex number (K2) a third complex number (K3);

- in case of a real-number multiplication (R), the first and third digit ranges (S1, S3) are fed with the digits 1 to m of the first or second number (Z1, Z2), and the second and fourth digit ranges (S2, S4) are fed with digits m+1 to 2m of the first or second number (Z1, Z2);

- in case of a complex-number multiplication (K), the first and third digit ranges (S1, S3) are fed with m imaginary-number digits (I1, I2) of the first or second complex number (K1, K2), and the second and fourth digit ranges (S2, S4) are fed with m real-number digits (R1, R2) of the first or second complex number (K1, K2);

- in case of a real-number multiplication (R), the controller (st), by means of a first digit assignment, causes a first basic weight (g1) to be assigned to the first subfield (T1), a second basic weight (g2) to be assigned to the third and fourth subfields (T3, T4), and a third basic weight (g3) to be assigned to the second subfield (T2), and the addition of the partial products of the first, second, third, and fourth subfields (T1 to T4) to be performed in a positionally correct manner in accordance with a resulting weight (g) of the individual partial products to provide the 4m digits of the third number (Z3), and

- in case of a complex-number multiplication (K), the controller (st), by means of a second digit assignment, causes a fourth basic weight (g4) to be assigned to the first and second subfields (T1, T2), and a fifth basic weight (g5) to be assigned to the third and fourth subfields (T3, T4), and, in accordance with the resulting weight, the second subfield (T2) to be subtracted from the first subfield (T1) and, separately therefrom, the third and fourth subfields (T3, T4) to be added to provide, respectively, 2m digits of the real part (R3) and 2m digits of the imaginary part (I3) of the third complex number (K3).

2. A multiplier as claimed in claim 1, characterized in that in case of a real- and complex-number multiplication, the arrangement of the partial products p(Nz,Ns) forms a rectangular partial-product field (sp) which comprises 4m digits in the row direction and 2m or less than 2m digits in the column direction, and
that the positions of the subfields (T1 to T4) in the rectangular partial-product field (sp) are determined by the associated basic weights (g1 to g5).

3. A multiplier as claimed in claim 1 or 2, characterized in that in case of a multiplication of real or complex binary numbers, the first basic weight (gl) has the value $2^{2m}$, the second basic weight (g2) the value $2^m$, the third basic weight (g3) the value $2^\circ$, the fourth basic weight (g4) the value $2^{2m}$, and the fifth basic weight (g5) the value $2^\circ$.

4. A multiplier as claimed in any one of claims 1 to 3, characterized in that the partial products are formed using a Booth's algorithm.

5. A multiplier as claimed in any one of claims 1 to 4, characterized in that in case of a complex-number multiplication, the partial products of the second subfield (T2) are formed as negated values, and that said negated partial products and the partial products of the first subfield (T1) are added in a positionally correct manner in accordance with the resulting weights (g).

6. A multiplier as claimed in any one of claims 1 to 5, characterized in that each partial product (p(Nz,Ns)) is assigned a multiplexer (mx) whose data inputs and control inputs are coupled to defined digits of the first and second data inputs (D1, D2), respectively, and whose data output provides the respective partial product.

7. A multiplier as claimed in claim 6, characterized in that the signals applied to the data inputs of the multiplexers (mx) are partly inverted.

8. A multiplier as claimed in any one of claims 1 to 7, characterized in that the positionally correct addition of the partial products in the adding arrangement (ad) is performed, at least in part, by means of an adding-tree structure (W).


**Revendications**

1. Multiplieur (M) pour des nombres réels ou complexes comportant un dispositif multiplicateur (mp) pour la formation de produits partiels à partir d'un premier et d'un deuxième nombres (Z1, Z2), qui comportent chacun 2m positions et qui sont envoyés au multiplieur sur une première, respectivement deuxième, entrée de données (D1, D2) et dont le produit peut être prélevé, en tant que troisième nombre (Z3), sur une sortie de données (D3) comportant 4m positions, m étant un nombre entier supérieur ou égal à 1, et dans lequel la première, respectivement deuxième, entrée de données (D1, D2) est divisée en des premier et deuxième, respectivement troisième et quatrième, domaines de positions (Si, S2, S3, S4),
    caractérisé par les caractéristiques suivantes :

- les produits partiels des deuxième et quatrième domaines de positions (S2, S4) constituent un premier champ partiel (T1), les produits partiels des premier et troisième domaines de positions (S1, S3) constituent un deuxième champ partiel (T2), les produits partiels des deuxième et troisième domaines de positions (S2, S3) constituent un troisième champ partiel (T3) et les produits partiels des premier et quatrième domaines de positions (S1, S4) constituent un quatrième champ partiel (T4),

- un dispositif de commande (st) commute, au choix, le multiplieur (M) d'une multiplication de nombres réels (R) à une multiplication de nombres complexes (K) qui forme, à partir d'un premier et d'un deuxième nombres complexes (K1, K2), un troisième nombre complexe (K3),
- dans le cas d'une multiplication de nombres réels (R), les premier et troisième, respectivement deuxième et quatrième, domaines de positions (S1, S3, respectivement S2, S4) sont alimentés avec les positions 1 à m, respectivement m + 1 à 2m, du premier ou deuxième nombre (Z1, Z2),
- dans le cas de la multiplication de nombres complexes (K), les premier et troisième domaines de positions (S1, S3) sont alimentés avec m positions de nombres imaginaires (11, 12) et les deuxième et quatrième domaines de positions (S2, S4) sont alimentés avec m positions de nombres réels (Ri, R2) du premier ou deuxième nombre complexe (K1, K2),
- dans le cas de la multiplication de nombres réels (R), le dispositif de commande (st) agit au moyen d'une première association de positions, on associe au premier champ partiel (T1) un premier poids de base (g1), aux troisième et quatrième champs partiels (T3, T4) un deuxième poids de base (g2) et au deuxième champ partiel (T2) un troisième poids de base (g3) et l'addition des produits partiels des premier, deuxième, troisième et quatrième champs partiels (T1 à T4) s'effectue, position par position, en correspondance avec un poids résultant (g) des produits partiels individuels, pour fournir les 4m positions du troisième nombre (Z3), et
- dans le cas de la multiplication de nombres complexes (K), le dispositif de commande (st) agit au moyen d'une deuxième association de positions, on associe au premier et au deuxième, respectivement troisième et quatrième, champs partiels (T1, T2, respectivement T3, T4) un quatrième, respectivement cinquième, poids de base (g4, respectivement g5) et, en correspondance avec le poids résultant, on soustrait le deuxième champ partiel (T2) du premier champ partiel (T1) et on y additionne, séparément, les troisième et quatrième champs partiels (T3, T4), pour fournir 2m positions de la partie réelle (R3), respectivement 2m positions de la partie imaginaire (13) du troisième nombre complexe (K3).

2. Multiplieur selon la revendication 1, caractérisé en ce que la disposition des produits partiels p(Nz, Ns), dans le cas de la multiplication de nombres réels et de nombres complexes, forme un champ de produits partiels (sp) rectangulaire qui comprend 4m positions, dans la direction des lignes et un nombre inférieur ou égal à 2m positions, dans la direction des colonnes, et

en ce que la place des champs partiels (T1 à T4) dans le champ de produits partiels rectangulaire (sp) est déterminée par les poids de base correspondants (g1 à g5).

3. Multiplieur selon la revendication 1 ou 2, caractérisé en ce que, dans le cas de la multiplication de nombres duaux réels ou complexes, le premier poids de base (g1) a la valeur $2^{2m}$, le deuxième poids de base (g2) a la valeur $2^m$, le troisième poids de base (g3) a la valeur $2^0$, le quatrième poids de base (g4) a la valeur $2^{2m}$ et le cinquième poids de base (g5) a la valeur $2^0$.

4. Multiplieur selon l'une quelconque des revendications 1 à 3, caractérisé en ce que la formation des produits partiels est effectuée au moyen d'un algorithme de Booth.

5. Multiplieur selon l'une quelconque des revendications 1 à 4, caractérisé en ce que, dans le cas de la multiplication de nombres complexes, les produits partiels du deuxième champ partiel (T2) sont réalisés sous la forme de valeurs inversées et que ces produits partiels inversés sont additionnés, position par position, avec les produits partiels du premier champ partiel (T1) en correspondance avec les poids résultants (g).

6. Multiplieur selon l'une quelconque des revendications 1 à 5, caractérisé en ce que, à chaque produit partiel (p(Nz, Ns)), on associe un multiplexeur (mx) dont les entrées de données sont couplées avec des positions définies de la première entrée de données (D1) et dont les entrées de commande sont couplées avec des positions définies de la deuxième entrée de données (D2) et sur la sortie de données duquel on délivre chaque produit partiel.

7. Multiplieur selon la revendication 6, caractérisé en ce que les signaux envoyés sur les entrées de données des multiplexeurs (mx) sont partiellement inversés.

8. Multiplieur selon l'une quelconque des revendications 1 à 7, caractérisé en ce que l'addition position par position des produits partiels dans le dispositif additionneur (ad) est effectuée au moins partiellement au moyen d'une structure d'arbre d'addition (W).

Fig.1

Fig.2

Fig.3

Fig.4

Fig.5

Fig.6

Fig.7

Fig. 8

14

| $Y_{n+1}$ | $Y_n$ | $Y_{n-1}$ | add / sub | | add | X | 2X | Xz | 2Xz |
|---|---|---|---|---|---|---|---|---|---|
| | **Z2** | | | | | | | **Z1** | |
| 0 | 0 | 0 | add | 0 | 0 | 0 | 0 | 0 | 0 |
| 0 | 0 | 1 | add | X | X | 1 | 0 | 0 | 0 |
| 0 | 1 | 0 | add | X | X | 1 | 0 | 0 | 0 |
| 0 | 1 | 1 | add | 2X | 2X | 0 | 1 | 0 | 0 |
| 1 | 0 | 0 | sub | 2X | 2Xz | 0 | 0 | 0 | 1 |
| 1 | 0 | 1 | sub | X | Xz | 0 | 0 | 1 | 0 |
| 1 | 1 | 0 | sub | X | Xz | 0 | 0 | 1 | 0 |
| 1 | 1 | 1 | sub | 0 | 0 | 0 | 0 | 0 | 0 |

## Fig.9

Fig.10

Fig.11

Fig.12

16

| | X | 2X | $X_Z$ | $2X_Z$ | $pl_{16}$ | $pl_{15}$ | $pl_{14}$ | $pl_{13}$ | $pl_{12}$ | $pl_{11}$ | $pl_{10}$ | $pl_9$ | $pl_8$ | $pl_7$ | $pl_6$ | $pl_5$ | $pl_4$ | $pl_3$ | $pl_2$ | $pl_1$ | $pl_{1C}$ |
|---|---|----|------|-------|-----------|-----------|-----------|-----------|-----------|-----------|-----------|-------|-------|-------|-------|-------|-------|-------|-------|-------|-----------|
| R | 0 | 0 | 0 | 0 | 0 | 0 | 0 | 0 | 0 | 0 | 0 | 0 | 0 | 0 | 0 | 0 | 0 | 0 | 0 | 0 | 0 |
| R | 1 | 0 | 0 | 0 | $X_7$ | $X_7$ | $X_7$ | $X_7$ | $X_7$ | $X_7$ | $X_7$ | $X_7$ | $X_7$ | $X_6$ | $X_5$ | $X_4$ | $X_3$ | $X_2$ | $X_1$ | $X_0$ | 0 |
| R | 0 | 1 | 0 | 0 | $X_7$ | $X_7$ | $X_7$ | $X_7$ | $X_7$ | $X_7$ | $X_7$ | $X_7$ | $X_6$ | $X_5$ | $X_4$ | $X_3$ | $X_2$ | $X_1$ | $X_0$ | 0 | 0 |
| R | 0 | 0 | 1 | 0 | $\overline{X}_7$ | $\overline{X}_7$ | $\overline{X}_7$ | $\overline{X}_7$ | $\overline{X}_7$ | $\overline{X}_7$ | $\overline{X}_7$ | $\overline{X}_7$ | $\overline{X}_7$ | $\overline{X}_6$ | $\overline{X}_5$ | $\overline{X}_4$ | $\overline{X}_3$ | $\overline{X}_2$ | $\overline{X}_1$ | $\overline{X}_0$ | 1 |
| R | 0 | 0 | 0 | 1 | $\overline{X}_7$ | $\overline{X}_7$ | $\overline{X}_7$ | $\overline{X}_7$ | $\overline{X}_7$ | $\overline{X}_7$ | $\overline{X}_7$ | $\overline{X}_7$ | $\overline{X}_6$ | $\overline{X}_5$ | $\overline{X}_4$ | $\overline{X}_3$ | $\overline{X}_2$ | $\overline{X}_1$ | $\overline{X}_0$ | 1 | 1 |

## Fig.13

| | X | 2X | $X_Z$ | $2X_Z$ | $pl_{16}$ | $pl_{15}$ | $pl_{14}$ | $pl_{13}$ | $pl_{12}$ | $pl_{11}$ | $pl_{10}$ | $pl_9$ | $pl_8$ | $pl_7$ | $pl_6$ | $pl_5$ | $pl_4$ | $pl_3$ | $pl_2$ | $pl_1$ | $pl_{1CH}$ | $pl_{1CL}$ |
|---|---|----|------|-------|-----------|-----------|-----------|-----------|-----------|-----------|-----------|-------|-------|-------|-------|-------|-------|-------|-------|-------|------------|------------|
| K | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| K | 1 | 0 | 0 | 0 | $\overline{X}_3$ | $\overline{X}_3$ | $\overline{X}_3$ | $\overline{X}_3$ | $\overline{X}_3$ | $\overline{X}_2$ | $\overline{X}_1$ | $\overline{X}_0$ | $X_7$ | $X_7$ | $X_7$ | $X_7$ | $X_7$ | $X_6$ | $X_5$ | $X_4$ | 1 | 0 |
| K | 0 | 1 | 0 | 0 | $\overline{X}_3$ | $\overline{X}_3$ | $\overline{X}_3$ | $\overline{X}_3$ | $\overline{X}_2$ | $\overline{X}_1$ | $\overline{X}_0$ | 1 | $X_7$ | $X_7$ | $X_7$ | $X_7$ | $X_6$ | $X_5$ | $X_4$ | 0 | 1 | 0 |
| K | 0 | 0 | 1 | 0 | $X_3$ | $X_3$ | $X_3$ | $X_3$ | $X_3$ | $X_2$ | $X_1$ | $X_0$ | $\overline{X}_7$ | $\overline{X}_7$ | $\overline{X}_7$ | $\overline{X}_7$ | $\overline{X}_7$ | $\overline{X}_6$ | $\overline{X}_5$ | $\overline{X}_4$ | 0 | 1 |
| K | 0 | 0 | 0 | 1 | $X_3$ | $X_3$ | $X_3$ | $X_3$ | $X_2$ | $X_1$ | $X_0$ | 0 | $\overline{X}_7$ | $\overline{X}_7$ | $\overline{X}_7$ | $\overline{X}_7$ | $\overline{X}_6$ | $\overline{X}_5$ | $\overline{X}_4$ | 1 | 0 | 1 |

## Fig.14

EP 0 629 943 B1

EP 0 629 943 B1

| | $X$ | $2X$ | $X_z$ | $2X_z$ | $p2_{16}$ | $p2_{15}$ | $p2_{14}$ | $p2_{13}$ | $p2_{12}$ | $p2_{11}$ | $p2_{10}$ | $p2_9$ | $p2_8$ | $p2_7$ | $p2_6$ | $p2_5$ | $p2_4$ | $p2_3$ | $p2_2$ | $p2_1$ | $p2_{3C}$ |
|---|---|---|---|---|---|---|---|---|---|---|---|---|---|---|---|---|---|---|---|---|---|
| R | 0 | 0 | 0 | 0 | 0 | 0 | 0 | 0 | 0 | 0 | 0 | 0 | 0 | 0 | 0 | 0 | 0 | 0 | 0 | 0 | 0 |
| R | 1 | 0 | 0 | 0 | $X_7$ | $X_7$ | $X_7$ | $X_7$ | $X_7$ | $X_7$ | $X_7$ | $X_6$ | $X_5$ | $X_4$ | $X_3$ | $X_2$ | $X_1$ | $X_0$ | 0 | 0 | 0 |
| R | 0 | 1 | 0 | 0 | $X_7$ | $X_7$ | $X_7$ | $X_7$ | $X_7$ | $X_7$ | $X_6$ | $X_5$ | $X_4$ | $X_3$ | $X_2$ | $X_1$ | $X_0$ | 0 | 0 | 0 | 0 |
| R | 0 | 0 | 1 | 0 | $\bar{X}_7$ | $\bar{X}_7$ | $\bar{X}_7$ | $\bar{X}_7$ | $\bar{X}_7$ | $\bar{X}_7$ | $\bar{X}_7$ | $\bar{X}_6$ | $\bar{X}_5$ | $\bar{X}_4$ | $\bar{X}_3$ | $\bar{X}_2$ | $\bar{X}_1$ | $\bar{X}_0$ | 0 | 0 | 1 |
| R | 0 | 0 | 0 | 1 | $\bar{X}_7$ | $\bar{X}_7$ | $\bar{X}_7$ | $\bar{X}_7$ | $\bar{X}_7$ | $\bar{X}_7$ | $\bar{X}_6$ | $\bar{X}_5$ | $\bar{X}_4$ | $\bar{X}_3$ | $\bar{X}_2$ | $\bar{X}_1$ | $\bar{X}_0$ | 1 | 0 | 0 | 1 |

## Fig.15

| | $X$ | $2X$ | $X_z$ | $2X_z$ | $p2_{16}$ | $p2_{15}$ | $p2_{14}$ | $p2_{13}$ | $p2_{12}$ | $p2_{11}$ | $p2_{10}$ | $p2_9$ | $p2_8$ | $p2_7$ | $p2_6$ | $p2_5$ | $p2_4$ | $p2_3$ | $p2_2$ | $p2_1$ | $p2_{11CH}$ | $p2_{3CL}$ |
|---|---|---|---|---|---|---|---|---|---|---|---|---|---|---|---|---|---|---|---|---|---|---|
| K | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| K | 1 | 0 | 0 | 0 | $\bar{X}_3$ | $\bar{X}_3$ | $\bar{X}_3$ | $\bar{X}_2$ | $\bar{X}_1$ | $\bar{X}_0$ | 0 | 0 | $X_7$ | $X_7$ | $X_7$ | $X_6$ | $X_5$ | $X_4$ | 0 | 0 | 1 | 0 |
| K | 0 | 1 | 0 | 0 | $\bar{X}_3$ | $\bar{X}_3$ | $\bar{X}_2$ | $\bar{X}_1$ | $\bar{X}_0$ | 1 | 0 | 0 | $X_7$ | $X_7$ | $X_6$ | $X_5$ | $X_4$ | 0 | 0 | 0 | 1 | 0 |
| K | 0 | 0 | 1 | 0 | $X_3$ | $X_3$ | $X_3$ | $X_2$ | $X_1$ | $X_0$ | 0 | 0 | $\bar{X}_7$ | $\bar{X}_7$ | $\bar{X}_7$ | $\bar{X}_6$ | $\bar{X}_5$ | $\bar{X}_4$ | 0 | 0 | 0 | 1 |
| K | 0 | 0 | 0 | 1 | $X_3$ | $X_3$ | $X_2$ | $X_1$ | $X_0$ | 0 | 0 | 0 | $\bar{X}_7$ | $\bar{X}_7$ | $\bar{X}_6$ | $\bar{X}_5$ | $\bar{X}_4$ | 1 | 0 | 0 | 0 | 1 |

## Fig.16

EP 0 629 943 B1

| | X | 2X | $X_Z$ | $2X_Z$ | $p3_{16}$ | $p3_{15}$ | $p3_{14}$ | $p3_{13}$ | $p3_{12}$ | $p3_{11}$ | $p3_{10}$ | $p3_9$ | $p3_8$ | $p3_7$ | $p3_6$ | $p3_5$ | $p3_4$ | $p3_3$ | $p3_2$ | $p3_1$ | $p3_{5C}$ |
|---|---|----|-------|--------|-----------|-----------|-----------|-----------|-----------|-----------|-----------|--------|--------|--------|--------|--------|--------|--------|--------|--------|-----------|
| R | 0 | 0 | 0 | 0 | 0 | 0 | 0 | 0 | 0 | 0 | 0 | 0 | 0 | 0 | 0 | 0 | 0 | 0 | 0 | 0 | 0 |
| R | 1 | 0 | 0 | 0 | $X_7$ | $X_7$ | $X_7$ | $X_7$ | $X_7$ | $X_6$ | $X_5$ | $X_4$ | $X_3$ | $X_2$ | $X_1$ | $X_0$ | 0 | 0 | 0 | 0 | 0 |
| R | 0 | 1 | 0 | 0 | $X_7$ | $X_7$ | $X_7$ | $X_7$ | $X_6$ | $X_5$ | $X_4$ | $X_3$ | $X_2$ | $X_1$ | $X_0$ | 0 | 0 | 0 | 0 | 0 | 0 |
| R | 0 | 0 | 1 | 0 | $\overline{X}_7$ | $\overline{X}_7$ | $\overline{X}_7$ | $\overline{X}_7$ | $\overline{X}_7$ | $\overline{X}_6$ | $\overline{X}_5$ | $\overline{X}_4$ | $\overline{X}_3$ | $\overline{X}_2$ | $\overline{X}_1$ | $\overline{X}_0$ | 0 | 0 | 0 | 0 | 1 |
| R | 0 | 0 | 0 | 1 | $\overline{X}_7$ | $\overline{X}_7$ | $\overline{X}_7$ | $\overline{X}_7$ | $\overline{X}_6$ | $\overline{X}_5$ | $\overline{X}_4$ | $\overline{X}_3$ | $\overline{X}_2$ | $\overline{X}_1$ | $\overline{X}_0$ | 1 | 0 | 0 | 0 | 0 | 1 |

Fig.17

| | X | 2X | $X_Z$ | $2X_Z$ | $p3_{16}$ | $p3_{15}$ | $p3_{14}$ | $p3_{13}$ | $p3_{12}$ | $p3_{11}$ | $p3_{10}$ | $p3_9$ | $p3_8$ | $p3_7$ | $p3_6$ | $p3_5$ | $p3_4$ | $p3_3$ | $p3_2$ | $p3_1$ | $p3_{9CH}$ | $p3_{1CL}$ |
|---|---|----|-------|--------|-----------|-----------|-----------|-----------|-----------|-----------|-----------|--------|--------|--------|--------|--------|--------|--------|--------|--------|------------|------------|
| K | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| K | 1 | 0 | 0 | 0 | $X_7$ | $X_7$ | $X_7$ | $X_7$ | $X_7$ | $X_6$ | $X_5$ | $X_4$ | $X_3$ | $X_3$ | $X_3$ | $X_3$ | $X_3$ | $X_2$ | $X_1$ | $X_0$ | 0 | 0 |
| K | 0 | 1 | 0 | 0 | $X_7$ | $X_7$ | $X_7$ | $X_7$ | $X_6$ | $X_5$ | $X_4$ | 0 | $X_3$ | $X_3$ | $X_3$ | $X_3$ | $X_2$ | $X_1$ | $X_0$ | 0 | 0 | 0 |
| K | 0 | 0 | 1 | 0 | $\overline{X}_7$ | $\overline{X}_7$ | $\overline{X}_7$ | $\overline{X}_7$ | $\overline{X}_7$ | $\overline{X}_6$ | $\overline{X}_5$ | $\overline{X}_4$ | $\overline{X}_3$ | $\overline{X}_3$ | $\overline{X}_3$ | $\overline{X}_3$ | $\overline{X}_3$ | $\overline{X}_2$ | $\overline{X}_1$ | $\overline{X}_0$ | 1 | 1 |
| K | 0 | 0 | 0 | 1 | $\overline{X}_7$ | $\overline{X}_7$ | $\overline{X}_7$ | $\overline{X}_7$ | $\overline{X}_6$ | $\overline{X}_5$ | $\overline{X}_4$ | 1 | $\overline{X}_3$ | $\overline{X}_3$ | $\overline{X}_3$ | $\overline{X}_3$ | $\overline{X}_2$ | $\overline{X}_1$ | $\overline{X}_0$ | 1 | 1 | 1 |

Fig.18

**Fig.19**

| | X | 2X | X_z | 2X_z | p4_16 | p4_15 | p4_14 | p4_13 | p4_12 | p4_11 | p4_10 | p4_9 | p4_8 | p4_7 | p4_6 | p4_5 | p4_4 | p4_3 | p4_2 | p4_1 | p4_c |
|---|---|----|-----|------|-------|-------|-------|-------|-------|-------|-------|------|------|------|------|------|------|------|------|------|------|
| R | 0 | 0 | 0 | 0 | 0 | 0 | 0 | 0 | 0 | 0 | 0 | 0 | 0 | 0 | 0 | 0 | 0 | 0 | 0 | 0 | 0 |
| R | 1 | 0 | 0 | 0 | $X_7$ | $X_7$ | $X_7$ | $X_6$ | $X_5$ | $X_4$ | $X_3$ | $X_2$ | $X_1$ | $X_0$ | 0 | 0 | 0 | 0 | 0 | 0 | 0 |
| R | 0 | 1 | 0 | 0 | $X_7$ | $X_7$ | $X_6$ | $X_5$ | $X_4$ | $X_3$ | $X_2$ | $X_1$ | $X_0$ | 0 | 0 | 0 | 0 | 0 | 0 | 0 | 0 |
| R | 0 | 0 | 1 | 0 | $\bar{X}_7$ | $\bar{X}_7$ | $\bar{X}_7$ | $\bar{X}_6$ | $\bar{X}_5$ | $\bar{X}_4$ | $\bar{X}_3$ | $\bar{X}_2$ | $\bar{X}_1$ | $\bar{X}_0$ | 0 | 0 | 0 | 0 | 0 | 0 | 1 |
| R | 0 | 0 | 0 | 1 | $\bar{X}_7$ | $\bar{X}_7$ | $\bar{X}_6$ | $\bar{X}_5$ | $\bar{X}_4$ | $\bar{X}_3$ | $\bar{X}_2$ | $\bar{X}_1$ | $\bar{X}_0$ | 1 | 0 | 0 | 0 | 0 | 0 | 0 | 1 |

**Fig.20**

| | X | 2X | X_z | 2X_z | p4_16 | p4_15 | p4_14 | p4_13 | p4_12 | p4_11 | p4_10 | p4_9 | p4_8 | p4_7 | p4_6 | p4_5 | p4_4 | p4_3 | p4_2 | p4_1 | p4_nCH | p4_3CL |
|---|---|----|-----|------|-------|-------|-------|-------|-------|-------|-------|------|------|------|------|------|------|------|------|------|--------|--------|
| K | 0 | 0 | 0 | 0 | 0 | 0 | 0 | 0 | 0 | 0 | 0 | 0 | 0 | 0 | 0 | 0 | 0 | 0 | 0 | 0 | 0 | 0 |
| K | 1 | 0 | 0 | 0 | $X_7$ | $X_7$ | $X_7$ | $X_6$ | $X_5$ | $X_4$ | 0 | 0 | $X_3$ | $X_3$ | $X_3$ | $X_2$ | $X_1$ | $X_0$ | 0 | 0 | 0 | 0 |
| K | 0 | 1 | 0 | 0 | $X_7$ | $X_7$ | $X_6$ | $X_5$ | $X_4$ | 0 | 0 | 0 | $X_3$ | $X_3$ | $X_2$ | $X_1$ | $X_0$ | 0 | 0 | 0 | 0 | 0 |
| K | 0 | 0 | 1 | 0 | $\bar{X}_7$ | $\bar{X}_7$ | $\bar{X}_7$ | $\bar{X}_6$ | $\bar{X}_5$ | $\bar{X}_4$ | 0 | 0 | $\bar{X}_3$ | $\bar{X}_3$ | $\bar{X}_3$ | $\bar{X}_2$ | $\bar{X}_1$ | $\bar{X}_0$ | 0 | 0 | 1 | 1 |
| K | 0 | 0 | 0 | 1 | $\bar{X}_7$ | $\bar{X}_7$ | $\bar{X}_6$ | $\bar{X}_5$ | $\bar{X}_4$ | 1 | 0 | 0 | $\bar{X}_3$ | $\bar{X}_3$ | $\bar{X}_2$ | $\bar{X}_1$ | $\bar{X}_0$ | 1 | 0 | 0 | 1 | 1 |